(19) Europäisches Patentamt
European Patent Office
Office européen des brevets

(11) Veröffentlichungsnummer : **0 342 158 B1**

(12) # EUROPÄISCHE PATENTSCHRIFT

(45) Veröffentlichungstag der Patentschrift : **01.09.93 Patentblatt 93/35**

(51) Int. Cl.$^5$ : **C09B 56/14,** D06P 1/39

(21) Anmeldenummer : **89810337.9**

(22) Anmeldetag : **01.05.89**

(54) **Wasserlösliche Phthalocyaninverbindungen, Verfahren zu ihrer Herstellung und ihre Verwendung.**

(30) Priorität : **11.05.88 CH 1785/88**

(43) Veröffentlichungstag der Anmeldung : **15.11.89 Patentblatt 89/46**

(45) Bekanntmachung des Hinweises auf die Patenterteilung : **01.09.93 Patentblatt 93/35**

(84) Benannte Vertragsstaaten : **BE CH DE ES FR GB IT LI**

(56) Entgegenhaltungen :
**DE-B- 1 176 300**
**FR-A- 1 421 156**
**FR-A- 1 441 328**
**GB-A- 763 343**

(73) Patentinhaber : **CIBA-GEIGY AG**
**Klybeckstrasse 141**
**CH-4002 Basel (CH)**

(72) Erfinder : **Schaulin, Rudolf, Dr.**
**Schäferstrasse 62**
**CH-4125 Riehen (CH)**

EP 0 342 158 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft neue wasserlösliche Phthalocyaninverbindungen, Verfahren zu deren Herstellung sowie deren Verwendung zum Färben und Bedrucken von Fasermaterialien, insbesondere von textilen Fasermaterialien.

Gegenstand der vorliegenden Erfindung sind neue wasserlösliche Phthalocyaninverbindungen der Formel

(1) 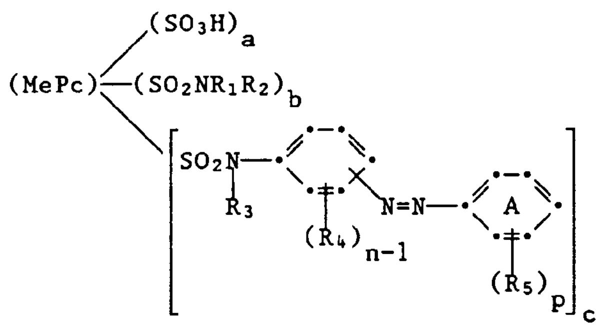

worin $R_1$ und $R_2$ gleich oder voneinander verschieden sind und jeweils Wasserstoff, Hydroxyalkyl mit 2 bis 5 Kohlenstoffatomen oder Carboxyalkyl mit 1 bis 5 Kohlenstoffatomen im Alkylrest oder Phenyl, oder

$R_1$ und $R_2$ zusammen mit dem Stickstoffatom einen heterocyclischen Ring mit gegebenenfalls weiteren Heteroatomen bedeuten,

$R_3$ Wasserstoff oder Methyl,

$R_4$ Alkyl oder Alkoxy mit jeweils 1 bis 5 Kohlenstoffatomen, $-NHCOR_6$, worin $R_6$ Alkyl oder Hydroxyalkyl mit jeweils 1 bis 3 Kohlenstoffatomen oder gegebenenfalls substituiertes Phenyl ist, oder Sulfo,

$R_6$ Alkyl oder Alkoxy mit jeweils 1 bis 5 Kohlenstoffatomen, Hydroxyl, Carboxyl oder Sulfo, wobei im Phenylring A mindestens zwei voneinander verschiedene Substituenten $R_5$ vorhanden sind,

Me ein koordinativ gebundenes Metallatom,

Pc ein (a+b+c)-wertiger Phthalocyaninrest,

n gleich 1 bis 3,

p gleich 2 bis 4,

a gleich 1 bis 2,

b gleich 0,5 bis 1,5 und

c gleich 1 bis 2 ist,

und die Summe aus (a+b+c) 2,5 bis 4 beträgt.

Die Substituenten $R_1$ und $R_2$, die gleich oder vonienander verschieden sind, haben die Bedeutung Wasserstoff, Hydroxyalkyl mit 2 bis 5 Kohlenstoffatomen, wie z.B. Hydroxyäthyl, Hydroxy-n-propyl, Hydroxy-n-butyl und Hydroxy-n-pentyl, sowie die entsprechenden verzweigten Hydroxyalkylreste; Carboxyalkyl mit 1 bis 5 Kohlenstoffatomen im Alkylteil, wie z.B. Carboxymethyl, Carboxyäthyl, Carboxy-n-propyl, Carboxy-n-butyl oder Carboxy-n-pentyl, sowie die entsprechenden Carboxyalkylreste, deren Alkylteil verzweigt ist; oder Phenyl.

Bevorzugt als Substituenten $R_1$ und $R_2$ sind Wasserstoff; Hydroxyäthyl oder Carboxyalkyl mit 1 oder 2 Kohlenstoffatomen im Alkylrest ($-CH_2COOH$, $-CH_2CH_2COOH$) oder Phenyl, wobei als besonders bevorzugte Kombination einer der Substituenten $R_1$ oder $R_2$ Wasserstoff und der andere einer der angegebenen Substituenten ist.

Bilden $R_1$ und $R_2$ zusammen mit dem Stickstoffatom, an dem sie gebunden sind, einen heterocyclischen Ring, so handelt es sich vorzugswseise um gesättigte heterocyclische 5- oder 6-Ringe, die als weitere Heteroatome Stickstoff-, Schwefel- und/oder Sauerstoffatome enthalten können. Beispiele für heterocyclische Reste - $NR_1R_2$ sind also Pyrrolidino, Piperidino, Pipecolino, Morpholino, Thiomorpholino oder Piperazino, wobei Pyrrolidino, Piperidino, Morpholino und Thiomorpholino bevorzugt sind.

$R_3$ ist Methyl oder vorzugsweise Wasserstoff.

Als $C_1$-$C_5$-Alkyl kommen für $R_4$ und $R_6$ in den Verbindungen der Formel (1) beispielsweise in Betracht: Methyl, Aethyl, Propyl, Isopropyl, n-Butyl Isobutyl, sek.-Butyl, tert.-Butyl, Pentyl oder Isopentyl. Bevorzugt sind die genannten Alkylreste mit 1 bis 3 Kohlenstoffatomen, insbesondere Methyl.

Als $C_1$-$C_5$-Alkoxy kommen für $R_4$ und $R_5$ beispielsweise in Betracht: Methoxy, Aethoxy, Propoxy, Isopropoxy, n-Butoxy, Isobutoxy, sek.-Butoxy, tert.-Butoxy, Pentoxy oder Isopentoxy. Bevorzugt sind die genannten Alkoxyreste mit 1 bis 3 Kohlenstoffatomen, insbesondere Methoxy.

Als $-NHCOR_6$ für $R_4$ in den Verbindungen der Formel (1) kommen beispielsweise Substituenten in Betracht wie $-NHCOCH_3$, $-NHCOCH_2CH_3$, $-NHCOCH_2CH_2CH_3$, $-NHCOCH_2OH$, $-NHCOCH_2CH_2OH$, $-NHCOCH_2CH_2CH_2OH$ oder

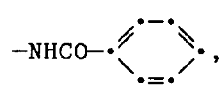

worin der Phenylring gegebenenfalls substituiert sein kann, z.B. mit Methyl oder Halogen. Bevorzugte Substituenten $-NHCOR_6$ sind $-NHCOCH_3$, $-NHCOCH_2OH$ oder $-NHCOC_6H_5$.

Die Bedeutung Sulfo in den Substituenten $R_4$ und $R_6$ umfasst sowohl die freie Säureform ($-SO_3H$) als auch die Salzform, wobei insbesondere Alkalimetallsalze (Li, Na, K) oder Ammoniumsalze in Frage kommen.

Weitere Substituenten $R_5$ sind Hydroxyl oder Carboxyl (-COOH), wobei im Ring A mindestens zwei voneinander verschiedene Substituenten, z.B. 2 bis 4 oder vorzugsweise 2 oder 3 dieser Substituenten vorhanden sind, z.B. Hydroxyl und Carboxyl. p ist entsprechend eine Zahl von 2 bis 4 und vorzugsweise 2 oder 3.

Der Rest

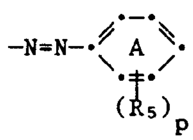

befindet sich z.B. in meta-Stellung und vorzugsweise in para-Stellung zur Gruppe

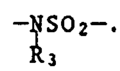

Als koordinativ gebundenes Metallatom ist Me in den Verbindungen der Formel (1) beispielsweise ein Eisen-, Kobalt-, Nickel- und insbesondere ein Kupferatom.

Pc ist die Kurzform für einen (a+b+c)-wertigen Phthalocyaninrest.

Die Indices a und c haben vorzugsweise jeweils einen (Durchschnitts)-Wert 1 bis 1,5 und besonderes bevorzugt jeweils einen Wert von ca. 1; der Index b weist bevorzugt einen (Durchschnitts)-Wert 0,5 bis 1 auf. Besonders bevorzugt hat die Summe der Indices (a+b) einen (Durchschnitts)-Wert $\leqq 2$ und insbesondere den Wert 1,5.

Bevorzugt sind solche Verbindungen der Formel (1), worin $R_1$ und $R_2$ gleich oder voneinander verschieden sind und jeweils Wasserstoff, Hydroxyäthyl oder Carboxyalkyl mit 1 oder 2 Kohlenstoffatomen im Alkylrest oder Phenyl sind, oder $R_1$ und $R_2$ zusammen mit dem Stickstoffatom einen heterocyclischen 5- oder 6-gliedrigen Ring bedeuten, der als weitere Heteroatome Stickstoff-, Schwefel- und/oder Sauerstoffatome enthalten kann, $R_4$ Alkyl oder Alkoxy mit jeweils 1 bis 3 Kohlenstoffatomen, $-NHCOCH_3$, $-NHCOCH_2OH$, $-NHCOC_6H_5$ oder Sulfo, $R_5$ Alkyl oder Alkoxy mit 1 bis 3 Kohlenstoffatomen, Hydroxyl, Carboxyl oder Sulfo, wobei im Phenylring A zwei oder drei Substituenten $R_6$ vorhanden sind, wovon mindestens zwei voneinander verschieden sind, und Me ein koordinativ gebundenes Eisen-, Kobalt-, Nickel- und insbesondere Kupferatom ist, und Pc, $R_3$, a, b, c, n und p die angegebenen Bedeutungen haben.

Besonders bevorzugte Verbindungen der Formel (1) entsprechen der Formel

(2) 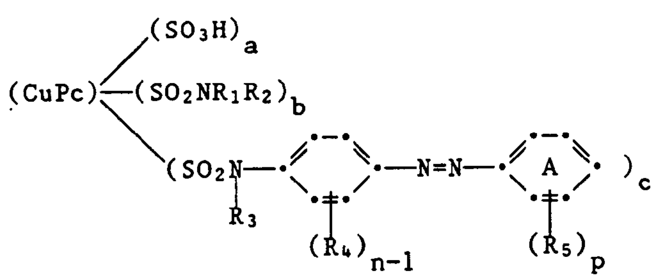 ,

worin $R_1$ und $R_2$ gleich oder voneinander verschieden sind und jeweils Wasserstoff, Hydroxyäthyl oder Carboxyalkyl mit 1 oder 2 Kohlenstoffatomen im Alkylrest oder Phenyl sind, oder $R_1$ und $R_2$ zusammen mit dem Stickstoffatom einen heterocyclischen 5- oder 6-gliedrigen Ring bedeuten, der als weitere Heteroatome Stickstoff-, Schwefel- und/oder Sauerstoffatome enthalten kann, $R_4$ Alkyl oder Alkoxy mit jeweils 1 bis 3 Kohlenstoffatomen, $-NHCOCH_3$, $-NHCOCH_2OH$, $-NHCOC_6H_5$ oder Sulfo, $R_5$ Alkyl oder Alkoxy mit 1 bis 3 Kohlenstoffatomen, Hydroxyl, Carboxyl oder Sulfo, wobei im Phenylring A zwei oder drei Substituenten $R_5$ vorhanden sind, wovon mindestens zwei voneinander verschieden sind, und Pc, $R_3$, a, b, c, n und p die angegebenen Bedeutungen haben.

Eine insbesondere bevorzugte Ausführungsform der vorliegenden Erfindung stellen Verbindungen der Formel

(2a) 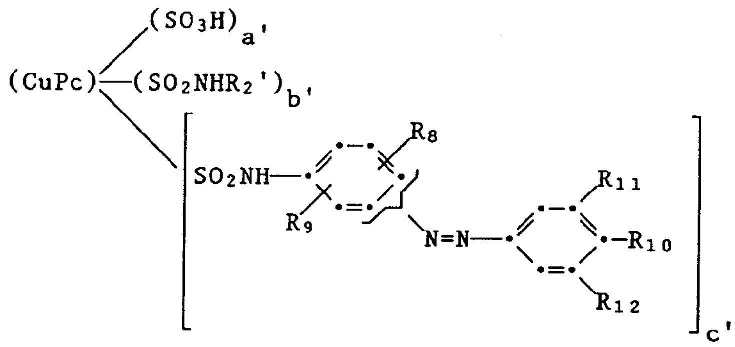 ,

worin $R_2$' Wasserstoff, Hydroxyäthyl oder Phenyl ist, $R_5$ Wasserstoff, Methyl oder Methoxy bedeutet, $R_9$ für Wasserstoff, Methyl, Methoxy, $-NHCOCH_3$, $-NHCOCH_2OH$ oder Sulfo steht, $R_{10}$ Methyl oder Hydroxy ist, $R_{11}$ Carboxy oder Sulfo und $R_{12}$ Wasserstoff, Carboxy oder Sulfo sind, wobei $R_{12}$ eine von $R_{11}$ verschiedene Bedeutung hat, a' und c' unabhängig voneinander gleich 1 bis 1,5 und b' gleich 0,5 bis 1,0 sind und die Summe aus (a+b+c) 2,5 bis 4 beträgt, dar.

Weiterhin zu erwähnen sind die Verbindungen der Formeln

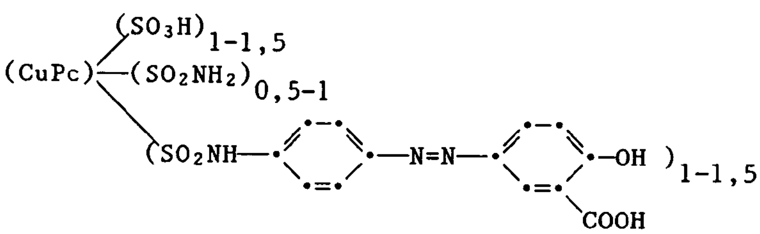 ,

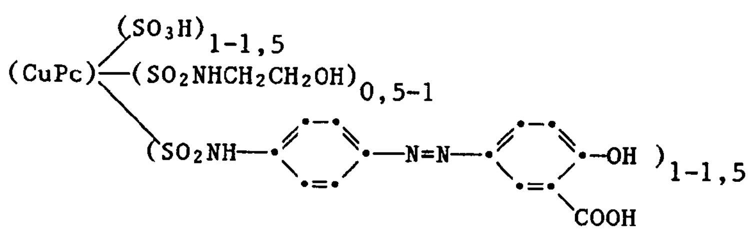

und

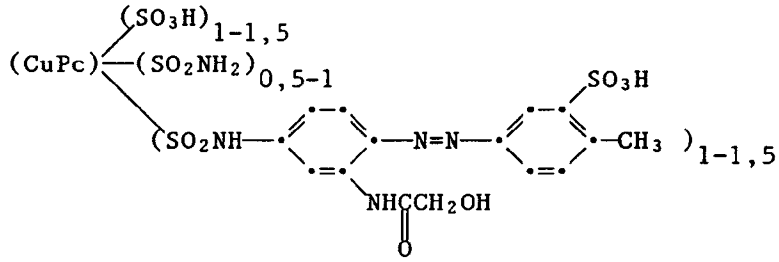 .

Das Verfahren zur Herstellung der Verbindungen der Formel (1) - und dies ist ein weiterer Gegenstand der vorliegenden Erfindung - ist dadurch gekennzeichnet, dass man Metallphthalocyaninsulfochloride der Formel

(3) 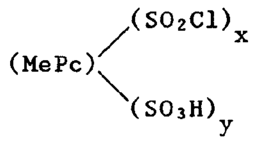 ,

worin Me ein koordinativ gebundenes Metallatom, x 2,5 bis 4, y 0 bis 1,5 und die Summe aus (x+y) kleiner oder gleich 4, vorzugsweise 3 bis 4 und insbesondere 3 ist,
mit Verbindungen, die primäre oder sekundäre Aminogruppen aufweisen, der Formeln

(4) 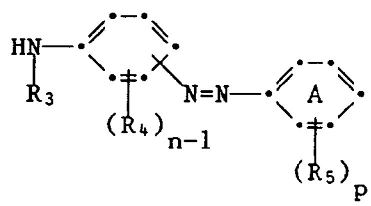

und (5) $HNR_1R_2$,
worin $R_1$, $R_2$, $R_3$, $R_4$, $R_5$, n und p die unter Formel (1) angegebenen Bedeutungen haben, in wässrigem Medium bei Temperaturen von 0 bis 100°C unter Einhaltung eines pH-Wertes von 5 bis 10 umsetzt (kondensiert) und anschliessend gegebenenfalls sauer oder alkalisch hydrolysiert.

Die Durchführung des erfindungsgemässen Verfahrens erfolgt bevorzugt bei 0 bis 40°C und einem pH-Wert im Bereich von 5 bis 8. Als Kondensationshilfsmittel sind stickstoffhaltige Verbindungen, wie z.B. Pyridin, Nicotinsäure oder Imidazol geeignet.

Die Verbindungen der Formeln (4) und (5) können gleichzeitig oder nacheinander mit den Phthalocyaninsulfochloriden der Formel (3) umgesetzt werden, wobei in der Regel zuerst mit den Aminogruppen enthaltenden Azofarbstoffen der Formel (4) und dann mit den Aminen der Formel (5) umgesetzt wird. Sie werden in b- bzw. c-fach molaren Mengen bezogen auf die Verbindung der Formel (3), vorzugsweise auch in 0,1- bis 1-fachen molaren Ueberschuss eingesetzt.

Die alkalische Hydrolyse kann mit Alkalimetallhydroxiden, -carbonaten oder -bicarbonaten oder Ammoniak oder Aminen, die saure Hydrolyse mit Mineralsäuren, insbesondere Salz- oder Schwefelsäure, durchgeführt werden.

Eine weitere Möglichkeit zur Herstellung der Verbindungen der Formel (1) besteht darin, die Phthalocyaninsulfochloride der Formel (3) mit einer Verbindung der Formel

(6) 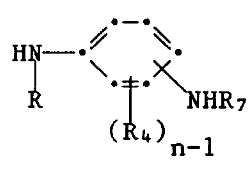

umzusetzen, die Schutzgruppe $R_7$, z.B. Acetyl, hydrolytisch abzuspalten, die entstehende Aminogruppe zu diazotieren und anschliessend mit einer Kupplungskomponente der Formel

(7) 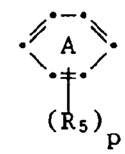

zu kuppeln.

Die Umsetzung mit der Verbindung der Formel (5) kann dann gleichzeitig mit der Umsetzung der Verbindung der Formel (6) oder anschliessend an die Kupplung erfolgen.

Die als Ausgangsverbindungen verwendeten Phthalocyaninsulfochloride der Formel (3) sind dem Fachmann bekannt oder können nach an sich bekannten Verfahren (Umsetzung des Metall-Phthalocyanins mit Chlorsulfonsäure und/oder Thionylchlorid bei erhöhter Temperatur) hergestellt werden (s. z.B. K. Venkataraman, The Chemistry of synthetic dyes, Vol. V, S. 261 (1971), Academic Press, New York/London: F.M. Moser, A.L. Thomas, The phthalocyanines, Vol. II, S. 20-22, CRC Press; 1983).

Bei den Verbindungen der Formel (4) handelt es sich ebenfalls um bekannte, in der Regel gelbe Azofarbstoffe mit freier primärer oder sekundärer Aminogruppe. Die Aminoverbindungen der Formel (5) sind allgemein bekannt und leicht zugänglich.

Ein weiterer Gegenstand der vorliegenden Erfindung ist die Verwendung der Phthalocyaninverbindungen der Formel (1), gegebenenfalls auch Mischungen dieser Verbindungen, zum Färben oder Bedrucken von stickstoffhaltigen und insbesondere hydroxylgruppenhaltigen Fasermaterialien.

Die erfindungsgemässen Phthalocyaninverbindungen (Phthalocyanin-Azofarbstoffe) der Formel (1) eignen sich also zum Färben und Bedrucken von stickstoffhaltigen oder insbesondere von cellulosischen Fasermaterialien, vorzugsweise von textilen Fasermaterialien, aus Seide, Wolle oder synthetischen Polyamiden, sowie bevorzugt aus den cellulosischen Fasern, wie Rayon, Baumwolle oder Hanf.

Bezüglich ihrer färberischen Eigenschaften können sie als direktziehende oder Direktfarbstoffe (C.I. direct dyes) bezeichnet werden.

Ebenfalls können textile Fasermaterialien aus Mischfasern, wie z.B. aus Wolle/Baumwoll-, Polyamid-/Baumwoll-, Polyacryl/Baumwoll- oder insbesondere Polyester/Baumwoll-Mischfasern durch Einbad-Färbeverfahren und in Gegenwart von Farbstoffen für die jeweils anderen Fasertypen gefärbt werden.

Die textilen Fasermaterialien können in den verschiedensten Verarbeitungszuständen vorliegen, wie z.B. als Faser, Garn, Gewebe oder Gewirke.

Neben den textilen Substraten können auch Leder und Papier mit erfindungsgemässen Verbindungen (Farbstoffen) der Formel (1) gefärbt werden.

Man erhält egale Färbungen in brillant-grünen Farbtönen mit guten Allgemeinechtheiten, insbesondere guten Reib-, Nass-, Nasssreib-, Schweiss- und Lichtechtheiten. Sofern nötig, kann man die Nassechtheiten, insbesondere die Waschechtheit, der erhaltenen Direktfärbungen und -drucke durch eine Nachbehandlung mit sogenannten Fixiermitteln noch wesentlich verbessern.

Die erfindungsgemässen Farbstoffe der Formel (1) sind gut mit anderen Farbstoffen, insbesondere Dispersionsfarbstoffen kombinierbar. Die erfindungsgemässen Farbstoffe weisen eine ausreichende Hochtemperatur-Stabilität auf und lassen sich so unter den Färbebedingungen für Polyesterfasern, d.h. bei Temperaturen im Bereich von etwa 100 bis 150°C, vorzugsweise von 110 bis 130°C, aus wässriger Flotte und bei einem pH-Wert von 4 bis 7,5, vorzugsweise 5 bis 7, färben.

Damit ist es möglich, übliche Dispersionsfarbstoffe zusammen mit den erfindungsgemässen Farbstoffen der Formel (1) in einem einstufigen, einbadigen Verfahren zum Färben von Polyester/Baumwoll-Mischfasern (Mischgewebe) einzusetzen, wobei beide Faserarten gleichmässig und echt durch den jeweiligen Farbstoff angefärbt werden. Verwendet man einen Dispersionsfarbstoff mit gleicher Nuance wie der erfindungsgemässe Farbstoff sie aufweist, so ist es auch möglich Ton-in-Ton-Färbungen zu erhalten.

Mit der Bereitstellung der erfindungsgemässen Farbstoffe der Formel (1) kann man das Färben von textilen Mischfasern (Mischgeweben), z.B. solchen aus Polyester- und Cellulosefasern, wesentlich vereinfachen. Die an sich übliche Färbung jeder Faserart einer Fasermischung in einem separaten Arbeitsgang unter Anwendung unterschiedlicher Färbebedingungen ist damit nicht mehr nötig.

Die erfindungsgemässen Verbindungen der Formel (1) eignen sich auch zur Herstellung von wässrigen Tinten für den Tintenstrahldruck (ink-jet printing).

Aus der FR-A-1 421 156 sind Phthalocyaninfarbstoffe bekannt, worin im Unterschied zu den erfindungsgemässen Farbstoffen der Azobenzolrest über ein zusätzliches Phenylcarbonylamino-Brückenglied gebunden ist.

Die folgenden Beispiele dienen zur Erläuterung der Erfindung. Teile und Prozente beziehen sich auf das Gewicht, sofern nicht anders angegeben. Gewichtsteile und Volumenteile stehen in gleicher Beziehung zueinander wie Kilogramm und Liter. Die Temperaturen sind in Celsiusgraden angegeben.

Beispiel 1: 17,4 Teile Kupferphthalocyanin-trisulfochlorid werden in 30 Teilen Wasser angerührt. Man erhält eine Suspension, in die 12,8 Teile 3-Carboxy-4-hydroxy-4'-aminoazobenzol (Natrium-Salz) gegeben werden. Das Reaktionsgemisch wird bei 45°C während 8 Stunden gerührt. Der pH-Wert wird durch Zugabe von 1N-wässriger Ammoniaklösung auf 6,5 bis 7,0 gehalten. Es werden etwa 80 Volumenteile der Ammoniaklösung benötigt.

Nach Beendigung der Reaktion wird der gebildete Farbstoff mit 15 g Natriumchlorid ausgefällt, abfiltriert und zunächst mit 5%iger wässriger Natriumchloridlösung und anschliessend mit Aethanol solange gewaschen bis ein farbloses Filtrat erhalten wird.

Nach dem Trocknen erhält man 22 Teile des Rohfarbstoffs der Formel

(101) 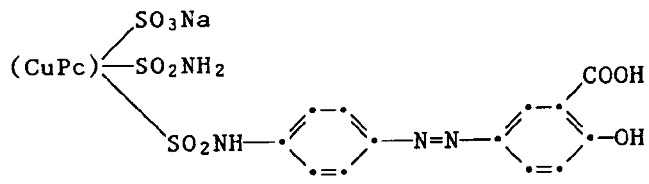

In analoger Weise kann man auch die Farbstoffe der Formeln

(102) 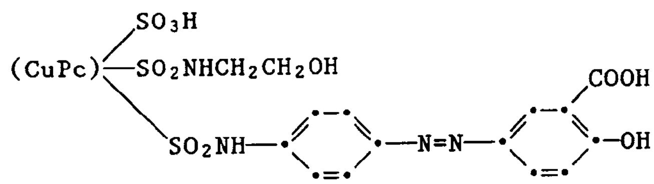

(103) 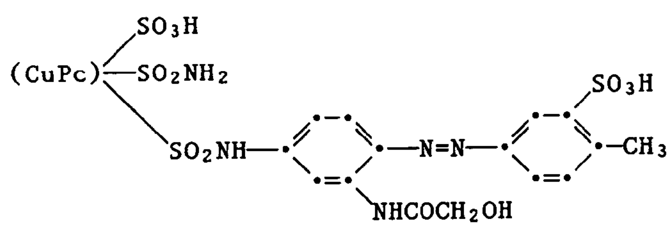

und

(104) 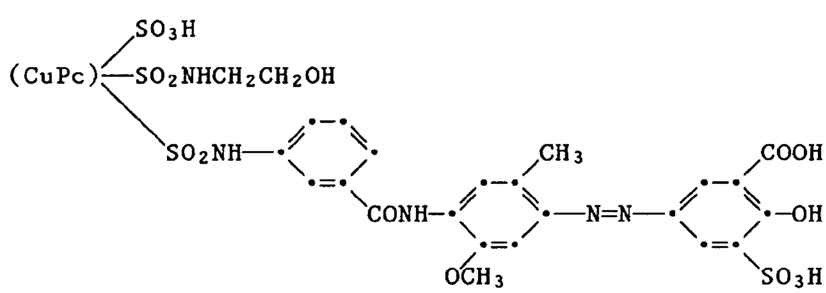

herstellen.

Beispiel 2: 17,4 Teile Kupferphthalocyanin-trisulfochlorid werden in 300 Teilen Eiswasser angerührt. Man erhält eine Suspension, in die 12,8 Teile 3-Carboxy-4-hydroxy-4'-aminoazobenzol (Natrium-Salz) gegeben werden. Das Reaktionsgemisch wird bei 45°C während 8 Stunden gerührt. Der pH-Wert wird durch Zugabe von 1N-wässriger Ammoniaklösung auf 7,0 bis 7,6 gehalten. Es werden etwa 80 Volumenteile der Ammoniaklösung benötigt.

Nach Beendigung der Reaktion wird der gebildete Farbstoff mit 30 Teilen Natriumchlorid ausgefällt, abfiltriert und zunächst mit 5%iger wässriger Natriumchloridlösung und anschliessend mit Aethanol solange gewaschen bis ein farbloses Filtrat erhalten wird.

Nach dem Trocknen erhält man 22 Teile des Rohfarbstoffs der Formel

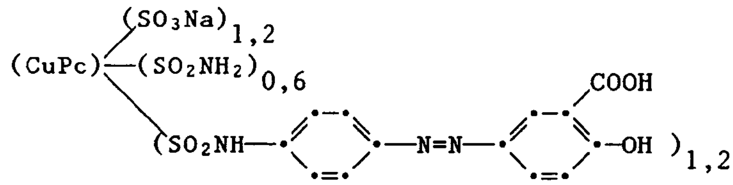

Beispiel 3: 16,3 Teile eines Kupferphthalocyanin-sulfochlorids, das pro Molekül durchschnittlich ca. 1,8 Sulfochlorid-Gruppen und 0,8 Sulfonsäure-Gruppen enthält, werden in 300 Teilen Wasser angerührt. Zu dieser Suspension gibt man 7,8 Teile des Monoazofarbstoffes 3-Carboxy-4-hydroxy-4'-aminoazobenzol (Natriumsalz) und 0,25 Teile Pyridin. Das Reaktionsgemisch wird dann 3 Stunden bei 0 bis 5°C, anschliessend 2 Stunden bei 15 bis 20°C und schliesslich 2 Stunden bei 35 bis 40°C gerührt und der pH-Wert während der Reaktion durch Zugabe von 1N Ammoniaklösung auf ca. 8,2 gehalten. Nach Beendigung der Umsetzung wird der Farbstoff mit Natriumchlorid ausgesalzen, abfiltriert, zuerst mit Natriumchloridlösung, dann mit Aethanol gewaschen und getrocknet. Der erhaltene Farbstoff der Formel

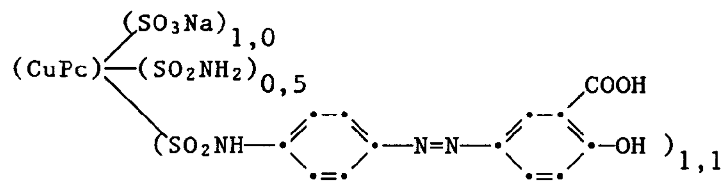

färbt Cellulose und Leder in brillanten blaustichig grünen Tönen mit guter Lichtechtheit.

Beispiel 4: 43,6 Teile eines Kupferphthalocyanin-sulfochlorids, das pro Molekül durchschnittlich ca. 1,7 Sulfochlorid-Gruppen und ca. 1,0 Sulfonsäure-Gruppen enthält, werden in 750 Teilen Eiswasser angeschlämmt. In diese Suspension gibt man 20 Teile des Monoazofarbstoffes 3-Carboxy-4-hydroxy-5'-methoxy-2'-methyl-4'-aminoazobenzol (Natriumsalz) und 0,5 Teile Pyridin. Das Reaktionsgemisch wird dann 4 Stunden bei 0-5°C, anschliessend 1 Stunde bei 10°C, 1 Stunde bei 20°C und am Ende 2 Stunden bei 40°C gerührt; während der Umsetzung wird der pH-Wert durch Zugabe von 2N wässriger Ammoniaklösung bei 8,5 bis 8,7 gehalten. Nach Beendigung der Reaktion wird der gebildete Farbstoff mit Natriumchlorid ausgesalzen, abfiltriert und zunächst mit wässriger Natriumchloridlösung, dann mit Aethanol gewaschen. Nach dem Trocknen erhält man 60 Teile des Rohfarbstoffes der Formel

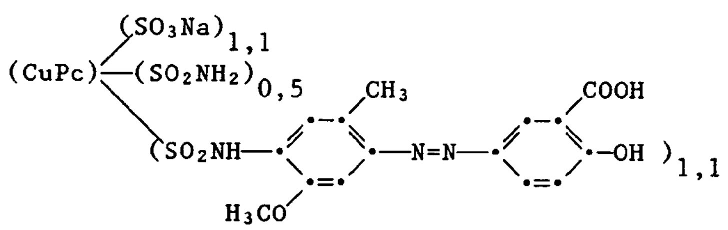 ;

Der Farbstoff färbt Cellulosematerialien und Leder in brillanten grünen Tönen mit guter Lichtechtheit und, insbesondere nach einer Nachbehandlung mit kationischen Fixiermitteln, guten Nassechtheiten.

Beispiel 5: 23,1 Teile Kupferphthalocyanin-Base (Natriumsalz), die pro Molekül ca. 1,1 Sulfonsäure-Gruppen, ca. 0,7 -$SO_2NH_2$-Gruppen und ca. 1,1 Gruppen der Formel

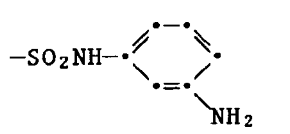

enthält (hergestellt in an sich bekannter Weise durch Sulfochlorierung von Kupferphthalocyanin und anschliessender Reaktion mit Ammoniak und 3-Aminoacetanilid, gefolgt von der Abspaltung der Acetylschutzgruppe),

werden zu einer Lösung von 2 Teilen Natriumnitrit in 200 Teilen Wasser gegeben. Nach Zugabe von 100 Teilen Eis wird unter Rühren eine Lösung von 14 Teilen Salzsäure 30%ig in 50 Teilen Eiswasser bei 0 bis 2°C zugetropft. Die Suspension des Diazoniumsalzes wird anschliessend bei 0 bis 4°C zu einer Lösung von 22,9 Teilen Salicylsäure (Natriumsalz) in 200 Teilen Eiswasser getropft. Während der Kupplung wird der pH-Wert des Reaktionsgemisches durch Zugabe von 30%iger Natriumhydroxidlösung bei ca. 8,5 gehalten. Nach beendeter Reaktion wird die Reaktionslösung mit Natriumchlorid versetzt, der ausgesalzene Farbstoff abfiltriert, mit Natriumchloridlösung gewaschen und getrocknet. Man erhält den Farbstoff der Formel

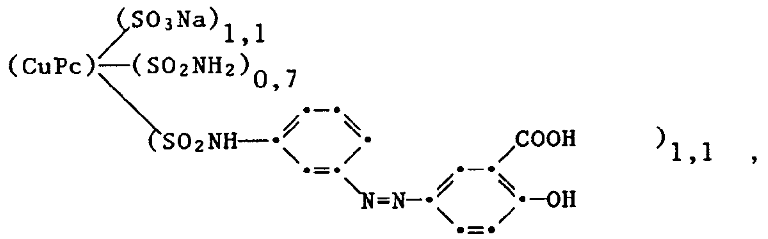

der Cellulosematerialien und Leder in blaustichigen, brillanten Grüntönen mit guter Lichtechtheit färbt.

<u>Beispiele 6 bis 16:</u> Analog wie in den Beispielen 1 bis 5 beschrieben lassen sich die folgenden Farbstoffe herstellen, die Cellulosematerialien und Leder jeweils in brillanten grünen Tönen mit guten Allgemeinechtheiten färben:

| Beispiel Nr. | Farbstoff |
|---|---|
| 6 | 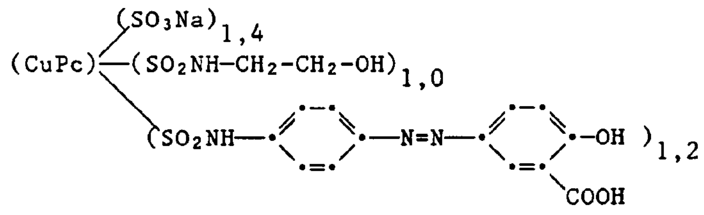 |
| 7 | 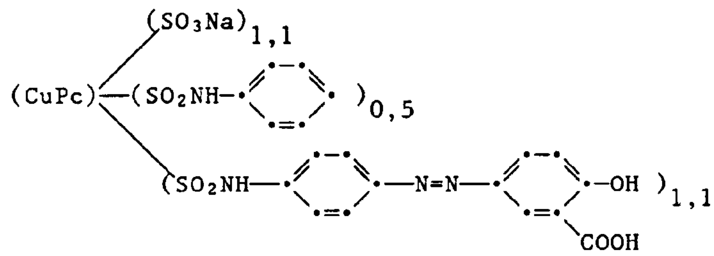 |
| 8 | 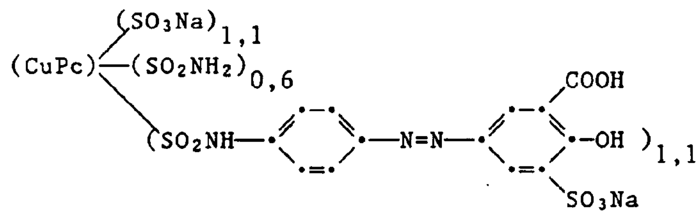 |
| 9 | 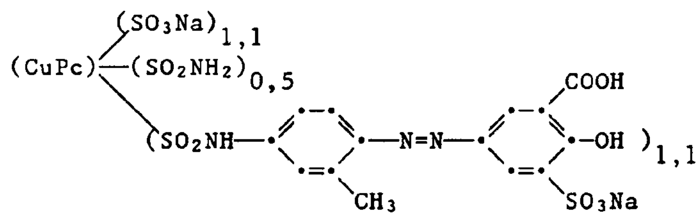 |
| 10 | 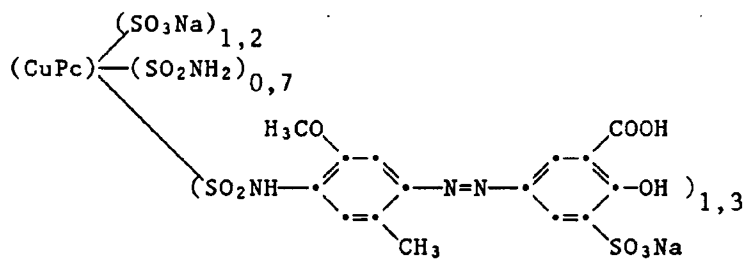 |
| 11 | 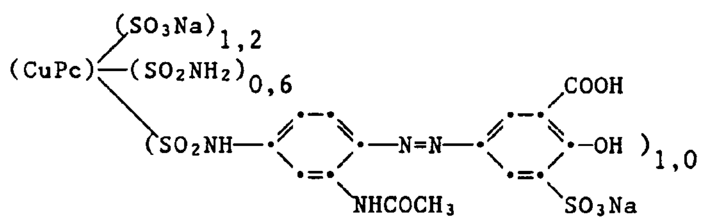 |

| Beispiel Nr. | Farbstoff |
|---|---|
| 12 | 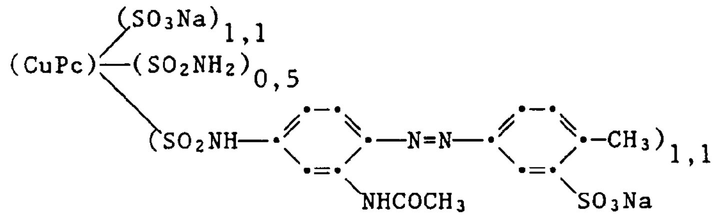 |
| 13 | 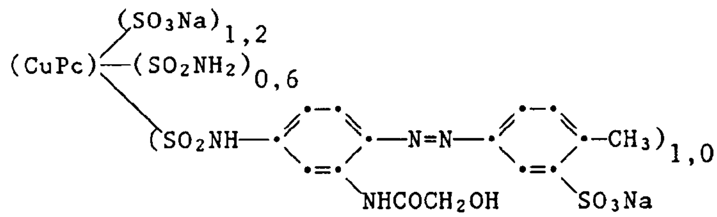 |
| 14 | 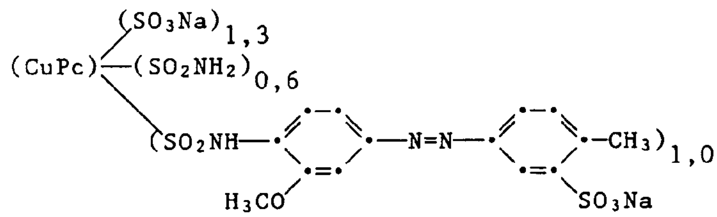 |
| 15 | 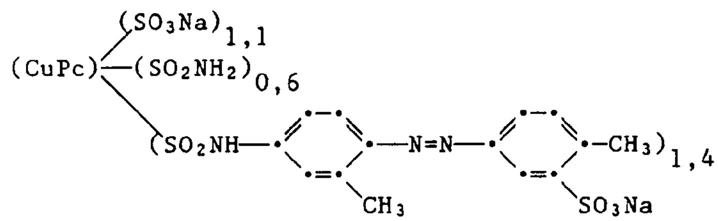 |
| 16 | 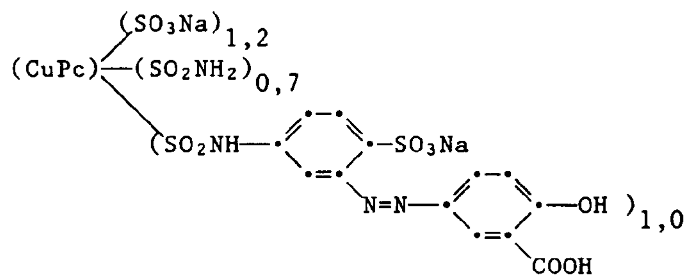 |

Färbevorschrift 1

10 Teile Baumwollgewebe (gebleicht und mercerisiert) werden bei ca. 30°C in ein Färbebad eingebracht, welches 200 Teile Wasser und 0,35 Teile Farbstoff des Beispiels 2 enthält. Die Flotte wird innerhalb von 30 Minuten auf 95°C erhitzt und 15 Minuten bei dieser Temperatur belassen. Dann werden 4 Teile Glaubersalz zugesetzt und noch weitere 45 Minuten bei 95°C gefärbt. Danach wird das Färbebad innerhalb von 15 Minuten auf 80°C abgekühlt und noch 15 Minuten bei dieser Temperatur belassen. Die Färbung wird dann gründlich mit kaltem Wasser gespült und getrocknet.

Färbevorschrift 2

10 Teile einer Fasermischung aus Polyester und Baumwolle werden bei ca. 50°C in ein Färbebad eingebracht, welches 200 Teile Wasser, ein Farbstoffgemisch bestehend aus 0,05 Teilen C.I. Disperse Yellow 99, 0.5 Teilen C.I. Disperse Blue 60 und 0,2 Teilen des Farbstoffes gemäss Beispiel 2, 0,4 Teile Ammoniumsulfat sowie 0,2 Teile eines anionischen Dispersionsmittels (z.B. Formaldehyd-Kondensationsprodukt von Naphthalinsulfonsäure) enthält. Das Färbebad wird mit Ameisensäure auf einen pH-Wert von 5,5 eingestellt, 1 Teil Glaubersalz zugesetzt und dann innerhalb von 45 Minuten auf ca. 130°C aufgeheizt. Man färbt weitere 45 Minuten bei 130°C, kühlt dann das Färbebad innerhalb von 30 Minuten auf ca. 80°C ab und belässt es weitere 45 Minuten bei dieser Temperatur. Die Färbung wird dann gründlich mit kaltem Wasser gespült und getrocknet.

Färbevorschrift 3

Man verfährt wie in den Färbevorschriften 1 oder 2 beschrieben, gibt jedoch nach Abschluss des Färbevorgangs die kalt gespülte Färbung in ein frisches ca. 30°C warmes Bad, welches 200 Teile Wasser und 0,2-0,6 Teile eines kationischen Nachbehandlungsmittels (Amin-Formaldehyd-Dicyandiamid-Kondensationsprodukt oder Zubereitung auf des Basis von Dicyandiamid und Diäthylentriamin) enthält. Die Färbung wird 30 Minuten bei 30°C nachbehandelt und anschliessend ohne weiteren Spülprozess getrocknet; man erhält eine Färbung mit verbesserten Nassechtheiten.

Färbevorschrift 4

Man verfährt wie in den Färbevorschriften 1 order 2 beschrieben, gibt jedoch nach Abschluss des Färbevorgangs die kalt gespülte Färbung in ein frisches ca. 25°C warmes Bad, welches 200 Teile Wasser, 1 Teil Glaubersalz und 0,6 Teile eines faserreaktiven kationischen Nachbehandlungsmittels auf Basis von N-Methyldialkylamin und Epichlorhydrin enthält. Die Temperatur wird innerhalb von 15 Minuten auf 40°C erhöht, 0.8 Teile 30%ige Natriumhydroxidlösung zugegeben und die Färbung weitere 45 Minuten bei 40°C behandelt. Die Färbung wird schliesslich heiss gespült und getrocknet; sie weist verbesserte Nassechtheiten auf.

## Patentansprüche

### Patentansprüche für folgende Vertragsstaaten : BE, CH, DE, FR, GB, IT, LI

1. Verbindung der Formel

(1) 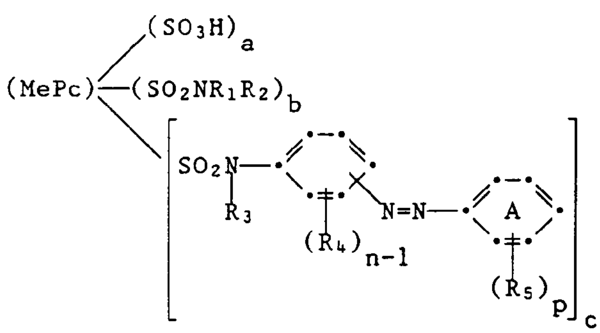

worin $R_1$ und $R_2$ gleich oder voneinander verschieden sind und jeweils Wasserstoff, Hydroxyalkyl mit 2 bis 5 Kohlenstoffatomen, Carboxyalkyl mit 1 bis 5 Kohlenstoffatomen im Alkylrest oder Phenyl, oder $R_1$ und $R_2$ zusammen mit dem Stickstoffatom einen heterocyclischen Ring mit gegebenenfalls weiteren Heteroatomen bedeuten,
$R_3$ Wasserstoff oder Methyl,
$R_4$ Alkyl oder Alkoxy mit jeweils 1 bis 5 Kohlenstoffatomen, $-NHCOR_6$, worin $R_6$ Alkyl oder Hydroxyalkyl mit jeweils 1 bis 3 Kohlenstoffatomen oder gegebenenfalls substituiertes Phenyl ist, oder Sulfo,
$R_5$ Alkyl oder Alkoxy mit jeweils 1 bis 5 Kohlenstoffatomen, Hydroxyl, Carboxyl oder Sulfo, wobei im Phenylring A mindestens zwei voneinander verschiedene Substituenten $R_5$ vorhanden sind,
Me ein koordinativ gebundenes Metallatom,

Pc ein (a+b+c)-wertiger Phthalocyaninrest,
n gleich 1 bis 3,
p gleich 2 bis 4,
a gleich 1 bis 2,
b gleich 0,5 bis 1,5 und
c gleich 1 bis 2 ist,
und die Summe aus (a+b+c) 2,5 bis 4 beträgt.

**2.** Verbindungen nach Anspruch 1, dadurch gekennzeichnet, dass
$R_1$ und $R_2$ gleich oder voneinander verschieden sind und jeweils Wasserstoff, Hydroxyäthyl oder Carboxyalkyl mit 1 oder 2 Kohlenstoffatomen im Alkylrest oder Phenyl sind oder
$R_1$ und $R_2$ zusammen mit dem Stickstoffatom einen heterocyclischen 5- oder 6-gliedrigen Ring bedeuten, der als weitere Heteroatome Stickstoff-, Schwefel- und/oder Sauerstoffatome enthalten kann,
$R_4$ Alkyl oder Alkoxy mit jeweils 1 bis 3 Kohlenstoffatomen, $-NHCOCH_3$, $-NHCOCH_2OH$, $-NHCOC_6H_5$ oder Sulfo,
$R_5$ Alkyl oder Alkoxy mit 1 bis 3 Kohlenstoffatomen, Hydroxyl, Carboxyl oder Sulfo, wobei im Phenylring A zwei oder drei Substituenten $R_5$ vorhanden sind, wovon mindestens zwei voneinander verschieden sind, und Me ein koordinativ gebundenes Eisen-, Kobalt-, Nickel- und insbesondere Kupferatom ist, und
Pc, $R_3$, a, b, c, n und p die in Anspruch 1 angegebenen Bedeutungen haben.

**3.** Verbindungen nach Anspruch 1 oder 2, dadurch gekennzeichnet, dass sie der Formel

(2) 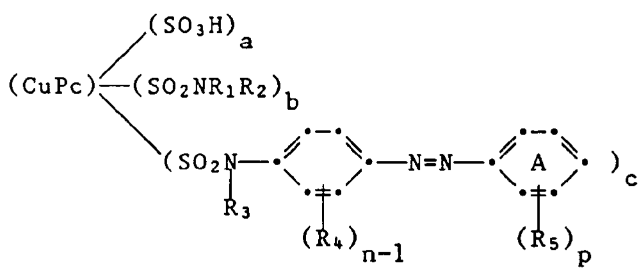

worin $R_1$ und $R_2$ gleich oder voneinander verschieden sind und jeweils Wasserstoff, Hydroxyäthyl oder Carboxyalkyl mit 1 oder 2 Kohlenstoffatomen im Alkylrest oder Phenyl sind, oder
$R_1$ und $R_2$ zusammen mit dem Stickstoffatom einen heterocyclischen 5- oder 6-gliedrigen Ring bedeuten, der als weitere Heteroatome Stickstoff-, Schwefel- und/oder Sauerstoffatome enthalten kann,
$R_4$ Alkyl oder Alkoxy mit jeweils 1 bis 3 Kohlenstoffatomen, $-NHCOCH_3$, $-NHCOCH_2OH$, $-NHCOC_6H_5$ oder Sulfo,
$R_5$ Alkyl oder Alkoxy mit 1 bis 3 Kohlenstoffatomen, Hydroxyl, Carboxyl oder Sulfo, wobei im Phenylring A zwei oder drei Substituenten $R_5$ vorhanden sind, wovon mindestens zwei voneinander verschieden sind, und Pc, $R_3$, a, b, c, n und p die in Anspruch 1 angegebenen Bedeutungen haben, entsprechen.

**4.** Verbindungen nach einem der Anspruche 1 bis 3, dadurch gekennzeichnet, dass a und c unabhängig voneinander 1 bis 1,5 und b 0,5 bis 1,0 sind.

**5.** Verbindungen nach Anspruch 1, dadurch gekennzeichnet, dass sie der Formel

(2a)

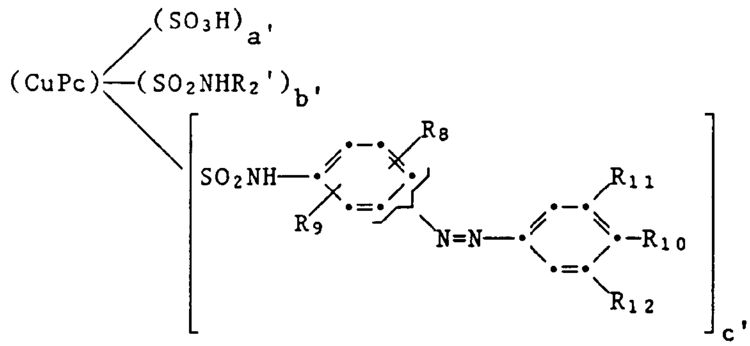

,

worin $R_2$' Wasserstoff, Hydroxyäthyl oder Phenyl ist, $R_8$ Wasserstoff, Methyl oder Methoxy bedeutet, $R_9$ für Wasserstoff, Methyl, Methoxy, $-NHCOCH_3$, $-NHCOCH_2OH$ oder Sulfo steht, $R_{10}$ Methyl oder Hydroxy ist, $R_{11}$ Carboxy oder Sulfo und $R_{12}$ Wasserstoff, Carboxy oder Sulfo sind, wobei $R_{12}$ eine von $R_{11}$ verschiedene Bedeutung hat, a' und c' unabhängig voneinander gleich 1 bis 1,5 und b' gleich 0,5 bis 1,0 sind und die Summe aus (a+b+c) 2,5 bis 4 beträgt, entsprechen.

6. Verbindungen nach Anspruch 1, dadurch gekennzeichnet, dass sie der Formel

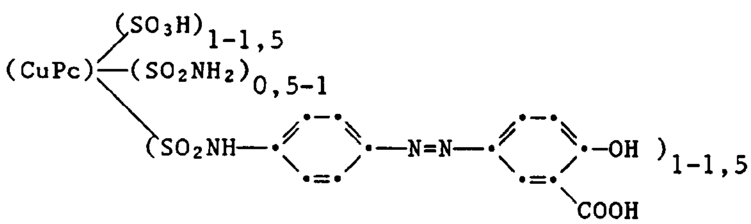

entsprechen.

7. Verbindungen nach Anspruch 1, dadurch gekennzeichnet, dass sie der Formel

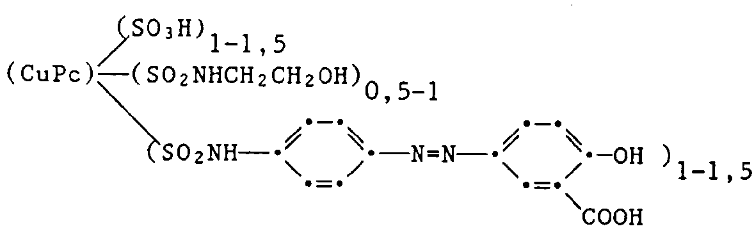

entsprechen.

8. Verbindungen nach Anspruch 1, dadurch gekennzeichnet, dass sie der Formel

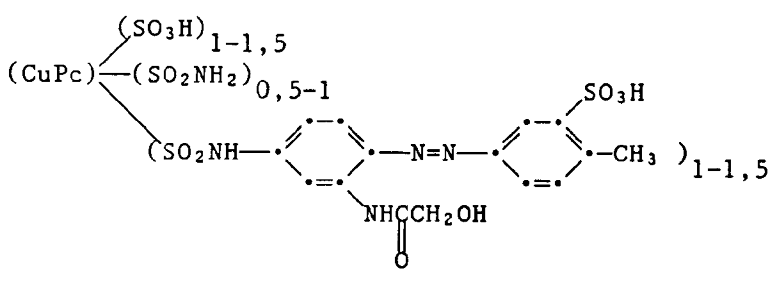

entsprechen.

**9.** Verfahren zur Herstellung der Verbindungen nach Anspruch 1, dadurch gekennzeichnet, dass man ein Metallphthalocyaninsulfochlorid der Formel

(3) 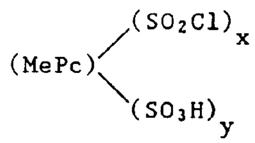 ,

worin Me ein koordinativ gebundenes Metallatom und x 2,5 bis 4, y 0 bis 1,5 und die Summe aus (x+y) kleiner oder gleich 4 ist, gleichzeitig oder nacheinander mit Aminen der Formeln

(4) 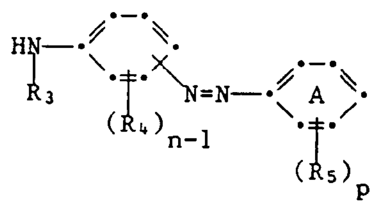

und (5) $HNR_1R_2$,
worin $R_1$, $R_2$, $R_3$, $R_4$, $R_5$, n und p die in Anspruch 1 angegebenen Bedeutungen haben,
in wässrigem Medium bei Temperaturen von 0 bis 100°C unter Einhaltung eines pH-Wertes von 5 bis 10 umsetzt, und anschliessend gegebenenfalls mit einer Säure oder einer alkalischen Verbindung hydrolysiert.

**10.** Verfahren zur Herstellung der Verbindungen nach Anspruch 1, dadurch gekennzeichnet, dass man ein Metallphthalocyaninsulfochlorid der Formel

(3) 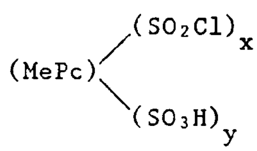 ,

worin Me ein koordinativ gebundenes Metallatom und x 2,5 bis 4, y 0 bis 1,5 und die Summe aus (x+y) kleiner oder gleich 4 ist, gleichzeitig oder nacheinander mit Aminen der Formeln

(6) 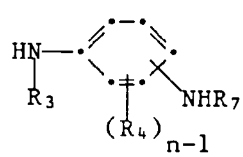

und (5) $HNR_1R_2$,
worin $R_7$ eine Schutzgruppe ist und $R_1$, $R_2$, $R_3$, $R_4$ und n die in Anspruch 1 angegebenen Bedeutungen haben,
in wässrigem Medium bei Temperaturen von 0 bis 100°C unter Einhaltung eines pH-Wertes von 5 bis umsetzt, anschliessend die Schutzgruppe abspaltet, die entstehende Aminogruppe diazotiert und die Diazoverbindung dann auf eine Kupplungskomponente der Formel

(7) 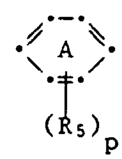

kuppelt.

11. Verwendung der Farbstoffe nach einem der Ansprüche 1 bis 8 oder der nach dem Verfahren gemäss den Ansprüchen 9 und 10 hergestellten Farbstoffe zum Färben und Bedrucken von stickstoffhaltigen und insbesondere cellulosischen Fasermaterialien.

12. Verwendung nach Anspruch 11, dadurch gekennzeichnet, dass man Fasergemische aus Synthesefasern und cellulosischen Fasermaterialien, insbesondere Polyester/Baumwoll-Mischgewebe, in Gegenwart eines Dispersionsfarbstoffes für die Polyesterfasern unter den Färbebedingungen für Polyesterfasern färbt.

13. Verfahren zum Färben von Polyester/Baumwoll-Mischgeweben mit Dispersions- und Direktfarbstoffen, dadurch gekennzeichnet, dass man in einem einstufigen, einbadigen Verfahren neben den Dispersionsfarbstoffen Farbstoffe der Formel (1) gemäss Anspruch 1 verwendet und aus wässriger Flotte bei Temperaturen im Bereich von 100 bis 150°C, vorzugsweise 120 bis 130°C, und einem pH-Wert zwischen 4 und 7,5 färbt.

**Patentansprüche für folgenden Vertragsstaat : ES**

1. Verfahren zur Herstellung von Verbindungen der Formel

(1) 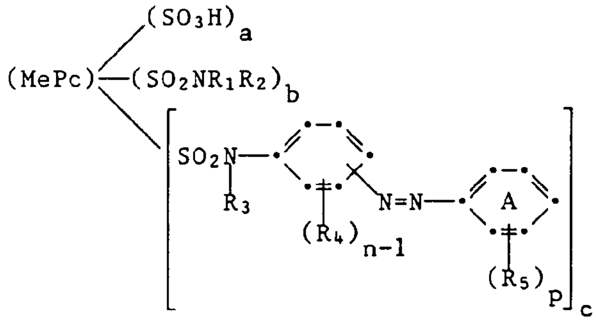

worin $R_1$ und $R_2$ gleich oder voneinander verschieden sind und jeweils Wasserstoff, Hydroxyalkyl mit 2 bis 5 Kohlenstoffatomen oder Carboxyalkyl mit 1 bis 5 Kohlenstoffatomen im Alkylrest oder Phenyl, oder $R_1$ und $R_2$ zusammen mit dem Stickstoffatom einen heterocyclischen Ring mit gegebenenfalls weiteren Heteroatomen bedeuten,
$R_3$ Wasserstoff oder Methyl,
$R_4$ Alkyl oder Alkoxy mit jeweils 1 bis 5 Kohlenstoffatomen, -NHCOR$_6$, worin $R_6$ Alkyl oder Hydroxyalkyl mit jeweils 1 bis 3 Kohlenstoffatomen oder gegebenenfalls substituiertes Phenyl ist, oder Sulfo,
$R_5$ Alkyl oder Alkoxy mit jeweils 1 bis 5 Kohlenstoffatomen, Hydroxyl, Carboxyl oder Sulfo, wobei im Phenylring A mindestens zwei voneinander verschiedene Substituenten $R_5$ vorhanden sind,
Me ein koordinativ gebundenes Metallatom,
Pc ein (a+b+c)-wertiger Phthalocyaninrest,
n gleich 1 bis 3,
p gleich 2 bis 4,
a gleich 1 bis 2,
b gleich 0,5 bis 1,5 und
c gleich 1 bis 2 ist,
und die Summe aus (a+b+c) 2,5 bis 4 beträgt, dadurch gekennzeichnet, dass man ein Metallphthalocyaninsulfochlorid der Formel

(3) 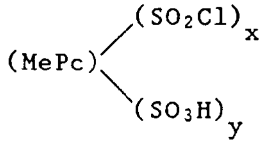 ,

worin Me ein koordinativ gebundenes Metallatom und x 2,5 bis 4, y 0 bis 1,5 und die Summe aus (x+y) kleiner oder gleich 4 ist, gleichzeitig oder nacheinander mit Aminen der Formeln

(4) 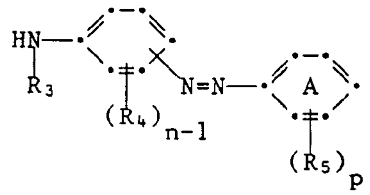

und (5) $HNR_1R_2$,
worin $R_1$, $R_2$, $R_3$, $R_4$, $R_5$, n und p die oben angegebenen Bedeutungen haben, in wässrigem Medium bei Temperaturen von 0 bis 100°C unter Einhaltung eines pH-Wertes von 5 bis 10 umsetzt, und anschliessend gegebenenfalls mit einer Säure oder einer alkalischen Verbindung hydrolysiert.

2. Verfahren nach Anspruch 1, dadurch gekennzeichnet, dass
$R_1$ und $R_2$ gleich oder voneinander verschieden sind und jeweils Wasserstoff, Hydroxyäthyl oder Carboxyalkyl mit 1 oder 2 Kohlenstoffatomen im Alkylrest oder Phenyl sind oder
$R_1$ und $R_2$ zusammen mit dem Stickstoffatom einen heterocyclischen 5- oder 6-gliedrigen Ring bedeuten, der als weitere Heteroatome Stickstoff-, Schwefel- und/oder Sauerstoffatome enthalten kann,
$R_4$ Alkyl oder Alkoxy mit jeweils 1 bis 3 Kohlenstoffatomen, $-NHCOCH_3$, $-NHCOCH_2OH$, $-NHCOC_6H_5$ oder Sulfo,
$R_5$ Alkyl oder Alkoxy mit 1 bis 3 Kohlenstoffatomen, Hydroxyl, Carboxyl oder Sulfo, wobei im Phenylring A zwei oder drei Substituenten $R_5$ vorhanden sind, wovon mindestens zwei voneinander verschieden sind, und Me ein koordinativ gebundenes Eisen-, Kobalt-, Nickel- und insbesondere Kupferatom ist, und
Pc, $R_3$, a, b, c, n und p die in Anspruch 1 angegebenen Bedeutungen haben.

3. Verfahren nach Anspruch 1 oder 2 zur Herstellung von Verbindungen der Formel

(2) 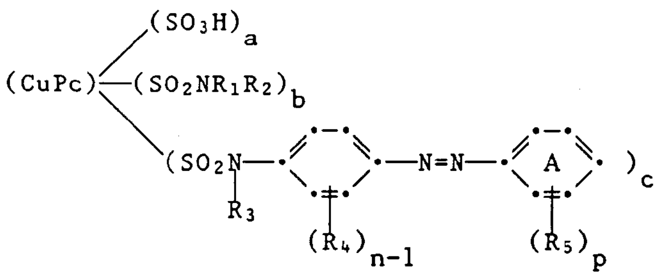

worin $R_1$ und $R_2$ gleich oder voneinander verschieden sind und jeweils Wasserstoff, Hydroxyäthyl oder Carboxyalkyl mit 1 oder 2 Kohlenstoffatomen im Alkylrest oder Phenyl sind, oder
$R_1$ und $R_2$ zusammen mit dem Stickstoffatom einen heterocyclischen 5- oder 6-gliedrigen Ring bedeuten, der als weitere Heteroatome Stickstoff-, Schwefel- und/oder Sauerstoffatome enthalten kann,
$R_4$ Alkyl oder Alkoxy mit jeweils 1 bis 3 Kohlenstoffatomen, $-NHCOCH_3$, $-NHCOCH_2OH$, $-NHCOC_6H_5$ oder Sulfo,
$R_5$ Alkyl oder Alkoxy mit 1 bis 3 Kohlenstoffatomen, Hydroxyl, Carboxyl oder Sulfo, wobei im Phenylring A zwei oder drei Substituenten $R_5$ vorhanden sind, wovon mindestens zwei voneinander verschieden sind, und Pc, $R_3$, a, b, c, n und p die in Anspruch 1 angegebenen Bedeutungen haben.

4. Verfahren nach einem der Ansprüche 1 bis 3, dadurch gekennzeichnet, dass a und c unabhängig voneinander 1 bis 1,5 und b 0,5 bis 1,0 sind.

5. Verfahren nach Anspruch 1 zur Herstellung von Verbindungen der Formel

(2a) 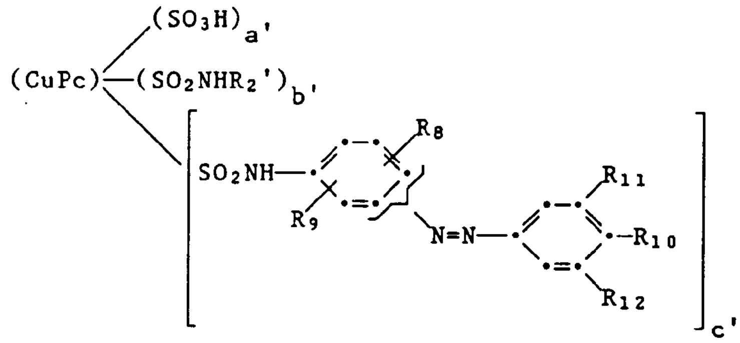 ,

worin $R_2'$ Wasserstoff, Hydroxyäthyl oder Phenyl ist, $R_8$ Wasserstoff, Methyl oder Methoxy bedeutet, $R_9$ für Wasserstoff, Methyl, Methoxy, $-NHCOCH_3$, $-NHCOCH_2OH$ oder Sulfo steht, $R_{10}$ Methyl oder Hydroxy ist, $R_{11}$ Carboxy oder Sulfo und $R_{12}$ Wasserstoff, Carboxy oder Sulfo sind, wobei $R_{12}$ eine von $R_{11}$ verschiedene Bedeutung hat, a' und c' unabhängig voneinander gleich 1 bis 1,5 und b' gleich 0,5 bis 1,0 sind und die Summe aus (a+b+c) 2,5 bis 4 beträgt.

6. Verfahren nach Anspruch 1 zur Herstellung von Verbindungen der Formel

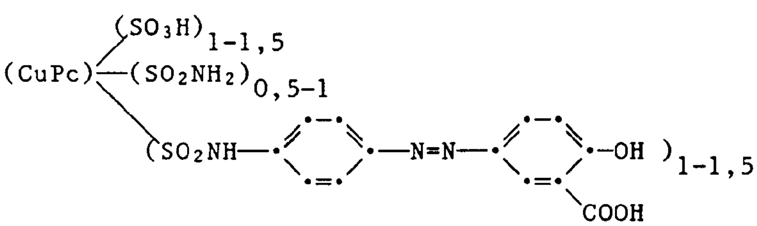 .

7. Verfahren nach Anspruch 1 zur Herstellung von Verbindungen der Formel

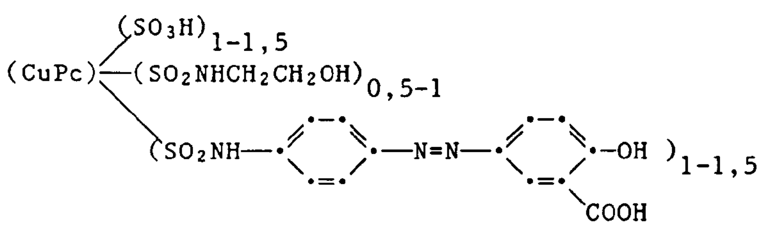 .

8. Verfahren nach Anspruch 1 zur Herstellung von Verbindungen der Formel

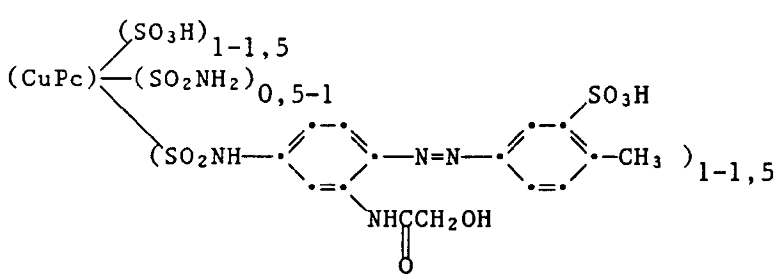 .

9. Verfahren zur Herstellung der Verbindungen der Formel (1) gemäss Anspruch 1, dadurch gekennzeichnet, dass man ein Metallphthalocyaninsulfochlorid der Formel

(3) 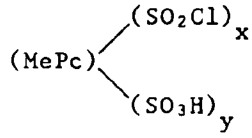 ,

worin Me ein koordinativ gebundenes Metallatom und x 2,5 bis 4, y 0 bis 1,5 und die Summe aus (x+y) kleiner oder gleich 4 ist, gleichzeitig oder nacheinander mit Aminen der Formeln

(6) 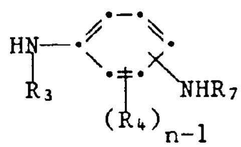

und (5) $HNR_1R_2$,
worin $R_7$ eine Schutzgruppe ist und $R_1$, $R_2$, $R_3$, $R_4$ und n die in Anspruch 1 angegebenen Bedeutungen haben,
in wässrigem Medium bei Temperaturen von 0 bis 100°C unter Einhaltung eines pH-Wertes von 5 bis 10 umsetzt, anschliessend die Schutzgruppe abspaltet, die entstehende Aminogruppe diazotiert und die Diazoverbindung dann auf eine Kupplungskomponente der Formel

(7) 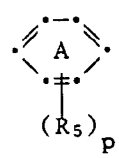

kuppelt.

**10.** Verwendung der Farbstoffe der nach dem Verfahren gemäss den Ansprüchen 1 bis 9 hergestellten Farbstoffe zum Färben und Bedrucken von stickstoffhaltigen und insbesondere cellulosischen Fasermaterialien.

**11.** Verwendung nach Anspruch 10, dadurch gekennzeichnet, dass man Fasergemische aus Synthesefasern und cellulosischen Fasermaterialien, insbesondere Polyester/Baumwoll-Mischgewebe, in Gegenwart eines Dispersionsfarbstoffes für die Polyesterfasern unter den Färbebedingungen für Polyesterfasern färbt.

**12.** Verfahren zum Färben von Polyester/Baumwoll-Mischgeweben mit Dispersions- und Direktfarbstoffen, dadurch gekennzeichnet, dass man in einem einstufigen, einbadigen Verfahren neben den Dispersionsfarbstoffen Farbstoffe der Formel (1) gemäss Anspruch 1 verwendet und aus wässriger Flotte bei Temperaturen im Bereich von 100 bis 150°C, vorzugsweise 120 bis 130°C, und einem pH-Wert zwischen 4 und 7,5 färbt.

## Claims

### Claims for the following Contracting States : BE, CH, DE, FR, GB, IT, LI

**1.** A compound of the formula

(1) 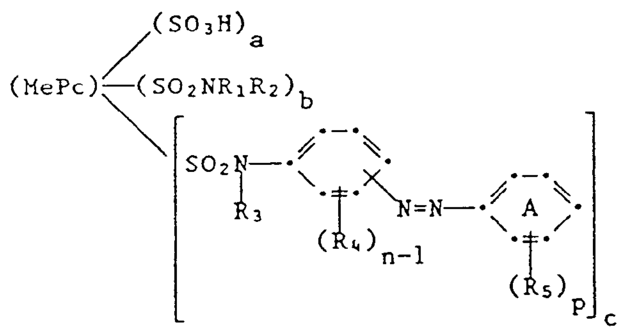

in which $R_1$ and $R_2$ are identical or different and in each case are hydrogen, hydroxyalkyl having 2 to 5 carbon atoms, carboxyalkyl having 1 to 5 carbon atoms in the alkyl radical or phenyl, or $R_1$ and $R_2$, together with the nitrogen atom, are a heterocyclic ring which can contain further hetero atoms, $R_3$ is hydrogen or methyl, $R_4$ is alkyl or alkoxy each of which has 1 to 5 carbon atoms, $-NHCOR_6$ in which $R_6$ is alkyl or hydroxyalkyl having in each case 1 to 3 carbon atoms, or substituted or unsubstituted phenyl, or sulfo, $R_6$ is alkyl or alkoxy each of which has 1 to 5 carbon atoms, hydroxyl, carboxyl or sulfo, at least two substituents $R_6$ which are different from one another being present in the phenyl ring A, Me is a metal atom attached by coordination, Pc is a (a+b+c)-valent phthalocyanine radical, n is 1 to 3, p is 2 to 4, a is 1 to 2, b is 0.5 to 1.5 and c is 1 to 2, and the total of (a+b+c) is 2.5 to 4.

2. A compound according to claim 1, wherein $R_1$ and $R_2$ are identical or different from one another and are in each case hydrogen, hydroxyethyl or carboxyalkyl having 1 or 2 carbon atoms in the alkyl radical or phenyl, or $R_1$ and $R_2$, together with the nitrogen atom, are a heterocyclic 5-membered or 6-membered ring which can contain, as further hetero atoms, nitrogen, sulfur and/or oxygen atoms, $R_4$ is alkyl or alkoxy having in each case 1 to 3 carbon atoms, $-NHCOCH_3$, $-NHCOCH_2OH$, $-NHCOC_6H_5$ or sulfo, $R_5$ is alkyl or alkoxy having 1 to 3 carbon atoms, hydroxyl, carboxyl or sulfo, there being two or three substituents $R_5$, of which at least two are different from one another, present in the phenyl ring A, and Me is an iron, cobalt, nickel and especially copper atom which is attached by coordination, and Pc, $R_3$, a, b, c, n and p are as defined in claim 1.

3. A compound according to either of claims 1 or 2, which has the formula

(2) 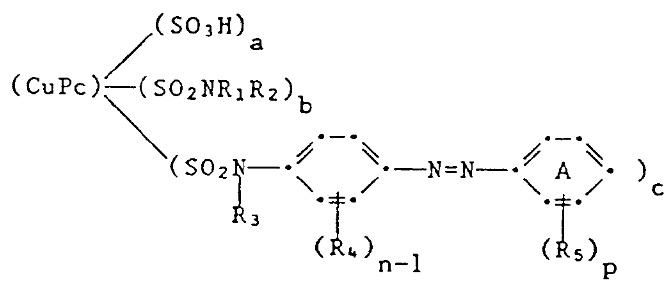

in which $R_1$ and $R_2$ are identical or different from one another and are in each case hydrogen, hydroxyethyl, carboxyalkyl having 1 or 2 carbon atoms in the alkyl radical or phenyl, or $R_1$ and $R_2$, together with the nitrogen atom, are a heterocyclic 5-membered or 6-membered ring which can contain, as further hetero atoms, nitrogen, sulfur and/or oxygen atoms, $R_4$ is alkyl or alkoxy having in each case 1 to 3 carbon atoms, $-NHCOCH_3$, $-NHCOCH_2OH$, $-NHCOC_6H_5$ or sulfo, $R_5$ is alkyl or alkoxy having 1 to 3 carbon atoms, hydroxyl, carboxyl or sulfo, there being two or three substituents $R_5$, of which at least two are different from one another, present in the phenyl ring A, and Pc, $R_3$, a, b, c, n and p are as defined in claim 1.

4. A compound according to any one of claims 1 to 3, wherein a and c independently of one another are 1 to 1.5 and b is 0.5 to 1.0.

5. A compound according to claim 1, which has the formula

(2a) 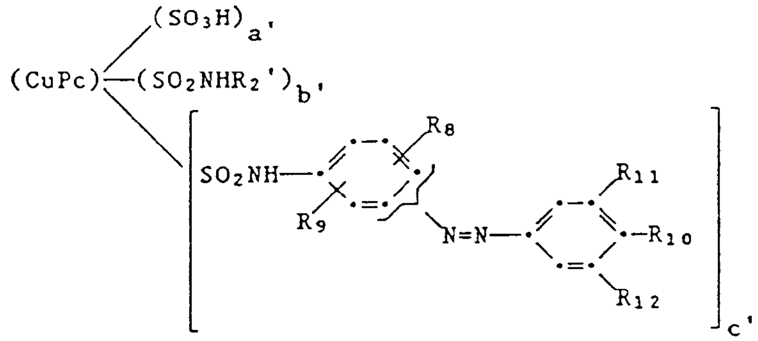 ,

in which $R_2$' is hydrogen, hydroxyethyl or phenyl, $R_8$ is hydrogen, methyl or methoxy, $R_9$ is hydrogen, methyl, methoxy, $-NHCOCH_3$, $-NHCOCH_2OH$ or sulfo, $R_{10}$ is methyl or hydroxyl, $R_{11}$ is carboxyl or sulfo and $R_{12}$ is hydrogen, carboxyl or sulfo, $R_{12}$ being different from $R_{11}$, and a' and c' independently of one another are 1 to 1.5 and b' is 0.5 to 1.0 and the total of (a+b+c) is 2.5 to 4.

6. A compound according to claim 1, which has the formula

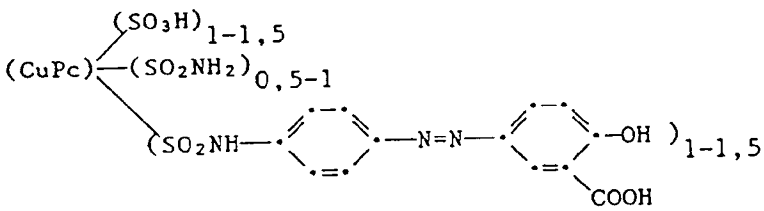

7. A compound according to claim 1, which has the formula

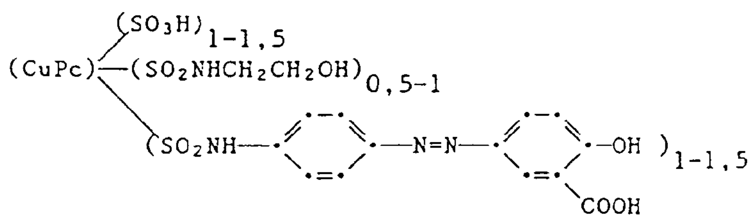

8. A compound according to claim 1, which has the formula

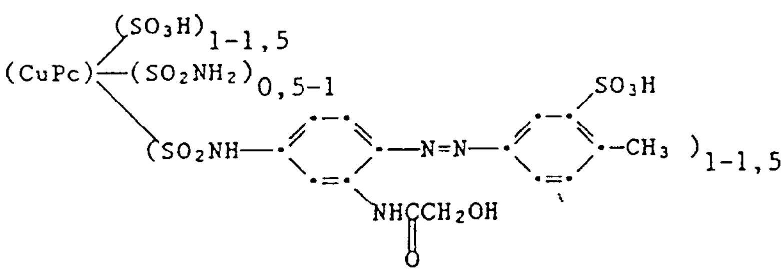

9. A process for the preparation of a compound according to claim 1, which comprises reacting a metal phthalocyaninesulfochloride of the formula

(3) 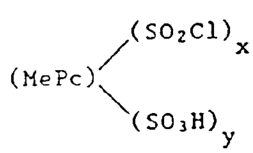 ,

in which Me is a metal atom attached by coordination and x is 2.5 to 4, y is 0 to 1.5 and the sum of (x+y) is less than or equal to 4, simultaneously or successively with amines of the formulae

(4) 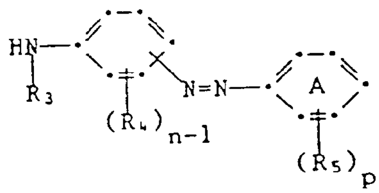

and (5) $HNR_1R_2$,
in which $R_1$, $R_2$, $R_3$, $R_4$, $R_5$, n and p are as defined in claim 1, in an aqueous medium at temperatures from 0 to 100°C, while the pH is maintained at a value from 5 to 10, and then hydrolysing the product with an acid or an alkaline compound, as desired.

**10.** A process for the preparation of a compound according to claim 1, wherein a metal phthalocyaninesulfochloride of the formula

(3) 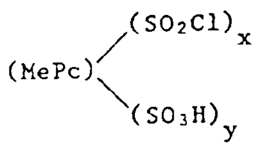 ,

in which Me is a metal atom attached by coordination and x is 2.5 to 4, y is 0 to 1.5 and the total of (x+y) is less than or equal to 4, is reacted, simultaneously or successively, with amines of the formulae

(6) 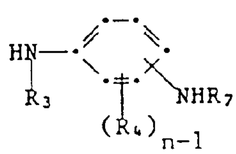

and (5) $NHR_1R_2$
in which $R_7$ is a protective group and $R_1$, $R_2$, $R_3$, $R_4$ and n are as defined in claim 1, in an aqueous medium at temperatures from 0 to 100°C, while the pH is maintained at a value from 5 to 10, the protective group is then detached, the resulting amino group is diazotised, and the diazo compound is then coupled with a coupling component of the formula

(7) 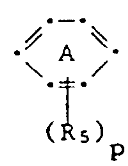

**11.** The use of the dyes according to any one of claims 1 to 8 or of the dyes prepared by the process according to claims 9 and 10 for dyeing and printing fibre materials containing nitrogen and especially cellulosic fibre materials.

**12.** The use according to claim 11, wherein a fibre mixture composed of synthetic fibres and cellulosic fibre materials, in particular a polyester/cotton mixed fabric, is dyed in the presence of a dipserse dye for the polyester fibres, under the dyeing conditions for polyester fibres.

**13.** A process for dyeing a polyester/cotton mixed fabric with disperse and direct dyes, wherein a dye of the formula (1) according to claim 1 is used, together with the disperse dyes, in a one-stage, one-bath process, and dyeing is carried out from an aqueous liquor at temperatures within the range from 100 to 150°C, preferably 120 to 130°C, and at a pH between 4 and 7.5.

**Claims for the following Contracting State : ES**

1. A process for the preparation of a compound of the formula

(1) 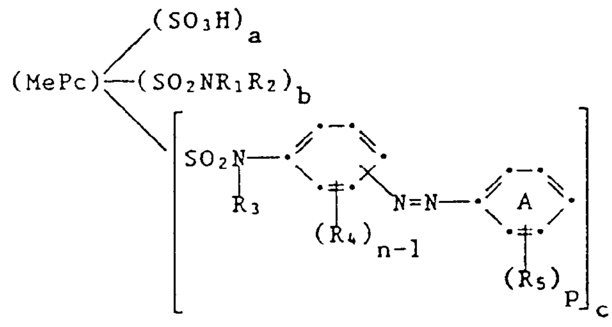

in which $R_1$ and $R_2$ are identical or different and in each case are hydrogen, hydroxyalkyl having 2 to 5 carbon atoms, carboxyalkyl having 1 to 5 carbon atoms in the alkyl radical or phenyl, or $R_1$ and $R_2$, together with the nitrogen atom, are a heterocyclic ring which can contain further hetero atoms, $R_3$ is hydrogen or methyl, $R_4$ is alkyl or alkoxy each of which has 1 to 5 carbon atoms, $-NHCOR_6$ in which $R_6$ is alkyl or hydroxyalkyl having in each case 1 to 3 carbon atoms, or substituted or unsubstituted phenyl, or sulfo, $R_6$ is alkyl or alkoxy each of which has 1 to 5 carbon atoms, hydroxyl, carboxyl or sulfo, at least two substituents $R_6$ which are different from one another being present in the phenyl ring A, Me is a metal atom attached by coordination, Pc is a (a+b+c)-valent phthalocyanine radical, n is 1 to 3, p is 2 to 4, a is 1 to 2, b is 0.5 to 1.5 and c is 1 to 2, and the total of (a+b+c) is 2.5 to 4, which comprises reacting a metal phthalocyaninesulfochloride of the formula

(3) 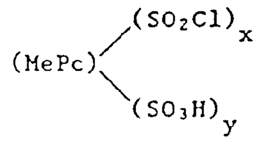 ,

in which Me is a metal atom attached by coordination and x is 2.5 to 4, y is 0 to 1.5 and the sum of (x+y) is less than or equal to 4, simultaneously or successively with amines of the formulae

(4) 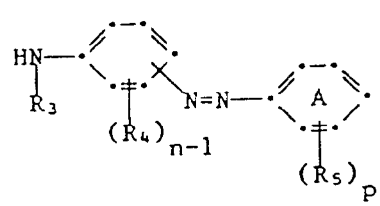

and (5) $HNR_1R_2$,
in which $R_1$, $R_2$, $R_3$, $R_4$, $R_5$, n and p are as defined above, in an aqueous medium at temperatures from 0 to 100°C, while the pH is maintained at a value from 5 to 10, and then hydrolysing the product with an acid or an alkaline compound, as desired.

2. A process according to claim 1, wherein $R_1$ and $R_2$ are identical or different from one another and are in each case hydrogen, hydroxyethyl, carboxyalkyl having 1 or 2 carbon atoms in the alkyl radical or phenyl, or $R_1$ and $R_2$, together with the nitrogen atom, are a heterocyclic 5-membered or 6-membered ring which can contain, as further hetero atoms, nitrogen, sulfur and/or oxygen atoms, $R_4$ is alkyl or alkoxy having in each case 1 to 3 carbon atoms, $-NHCOCH_3$, $-NHCOCH_2OH$, $-NHCOC_6H_5$ or sulfo, $R_6$ is alkyl or alkoxy having 1 to 3 carbon atoms, hydroxyl, carboxyl or sulfo, there being two or three substituents $R_5$, of which at least two are different from one another, present in the phenyl ring A, and Me is an iron, cobalt, nickel and especially copper atom which is attached by coordination, and Pc, $R_3$, a, b, c, n and p are as defined in claim 1.

3. A process according to either of claims 1 or 2, for the preparation of a compound of the formula

(2) 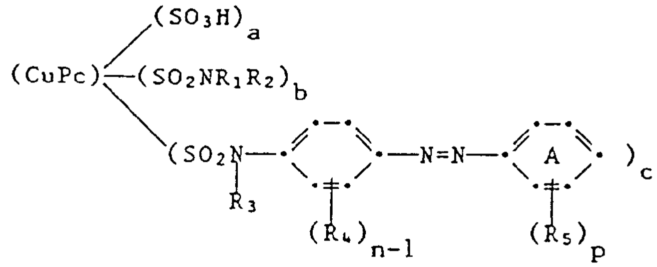

in which $R_1$ and $R_2$ are identical or different from one another and are in each case hydrogen, hydroxyethyl, carboxyalkyl having 1 or 2 carbon atoms in the alkyl radical or phenyl, or $R_1$ and $R_2$, together with the nitrogen atom, are a heterocyclic 5-membered or 6-membered ring which can contain, as further hetero atoms, nitrogen, sulfur and/or oxygen atoms, $R_4$ is alkyl or alkoxy having in each case 1 to 3 carbon atoms, $-NHCOCH_3$, $-NHCOCH_2OH$, $-NHCOC_6H_5$ or sulfo, $R_5$ is alkyl or alkoxy having 1 to 3 carbon atoms, hydroxyl, carboxyl or sulfo, there being two or three substituents $R_5$, of which at least two are different from one another, present in the phenyl ring A, and Pc, $R_3$, a, b, c, n and p are as defined in claim 1.

4. A process according to any one of claims 1 to 3, wherein a and c independently of one another are 1 to 1.5 and b is 0.5 to 1.0.

5. A process according to claim 1, for the preparation of a compound of the formula

(2a) 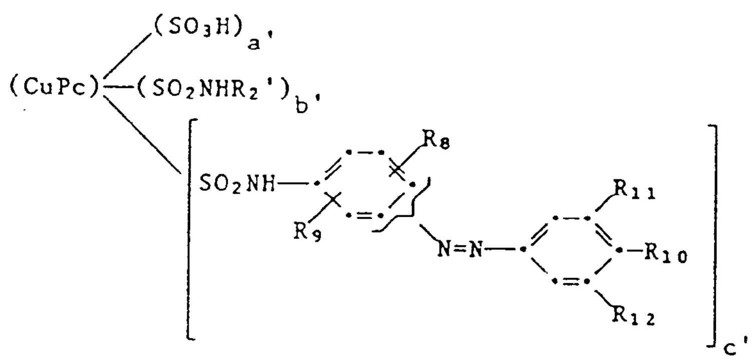 ,

in which $R_2$' is hydrogen, hydroxyethyl or phenyl, $R_8$ is hydrogen, methyl or methoxy, $R_9$ is hydrogen, methyl, methoxy, $-NHCOCH_3$, $-NHCOCH_2OH$ or sulfo, $R_{10}$ is methyl or hydroxyl, $R_{11}$ is carboxyl or sulfo and $R_{12}$ is hydrogen, carboxyl or sulfo, $R_{12}$ being different from $R_{11}$, and a' and c' independently of one another are 1 to 1.5 and b' is 0.5 to 1.0 and the total of (a+b+c) is 2.5 to 4.

6. A process according to claim 1, for the preparation of a compound of the formula

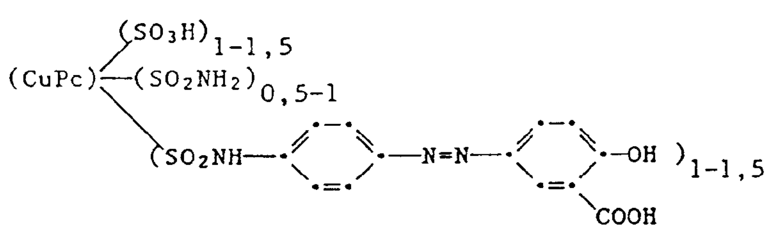 .

7. A process according to claim 1, for the preparation of a compound of the formula

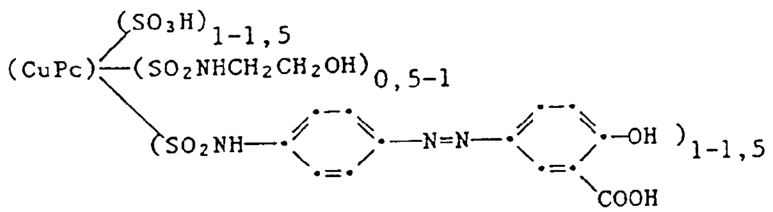 .

8. A process according to claim 1, for the preparation of a compound of the formula

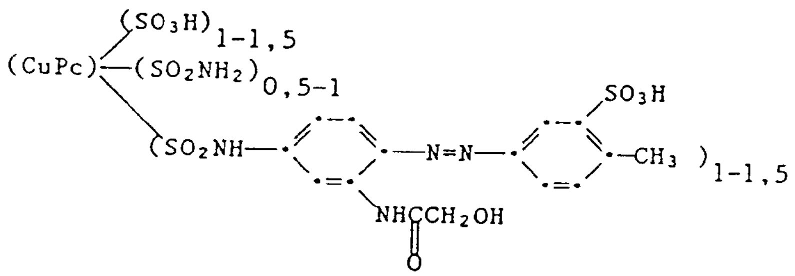 .

9. A process for the preparation of a compound of the formula (1) according to claim 1, wherein a metal phthalocyaninesulfochloride of the formula

(3) 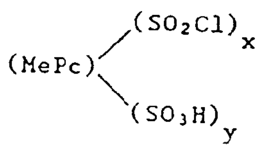 ,

in which Me is a metal atom attached by coordination and x is 2.5 to 4, y is 0 to 1.5 and the total of (x+y) is less than or equal to 4, is reacted, simultaneously or successively, with amines of the formulae

(6) 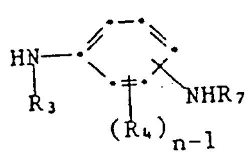

and (5) $HNR_1R_2$,
in which $R_7$ is a protective group and $R_1$, $R_2$, $R_3$, $R_4$ and n are as defined in claim 1, in an aqueous medium at temperatures from 0 to 100°C, while the pH is maintained at a value from 5 to 10, the protective group is then detached, the resulting amino group is diazotised, and the diazo compound is then coupled with a coupling component of the formula

(7) 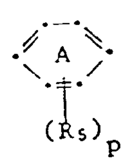

10. The use of the dyes prepared by the process according to any one of claims 1 to 9 for dyeing and printing fibre materials containing nitrogen and especially cellulosic fibre materials.

11. The use according to claim 10, wherein a fibre mixture composed of synthetic fibres and cellulosic fibre materials, in particular a polyester/cotton mixed fabric, is dyed in the presence of a dipserse dye for the polyester fibres, under the dyeing conditions for polyester fibres.

12. A process for dyeing a polyester/cotton mixed fabric with disperse and direct dyes, wherein a dye of the formula (1) according to claim 1 is used, together with the disperse dyes, in a one-stage, one-bath process, and dyeing is carried out from an aqueous liquor at temperatures within the range from 100 to 150°C, preferably 120 to 130°C, and at a pH between 4 and 7.5.

## Revendications

### Revendications pour les Etats contractants suivants : BE, CH, DE, FR, GB, IT, LI

1. Composés de formule :

(1) 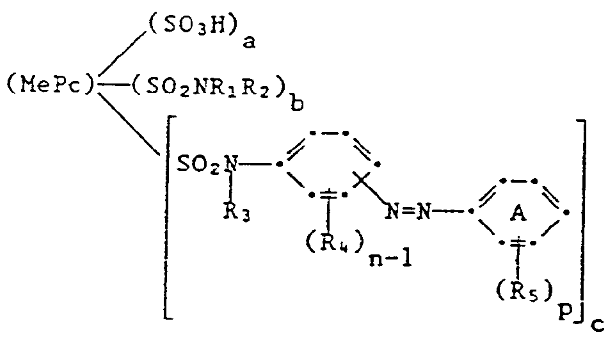

dans laquelle :

| | |
|---|---|
| $R_1$ et $R_2$ | sont identiques ou différents l'un de l'autre et représentent chacun un atome d'hydrogène, un groupe hydroxyalkyle comportant de 2 à 5 atomes de carbone, un groupe carboxyalkyle comportant de 1 à 5 atomes de carbone dans le fragment alkyle ou un groupe phényle, ou bien |
| $R_1$ et $R_2$ | forment conjointement avec l'atome d'azote un noyau hétérocycle comportant éventuellement d'autres hétéroatomes, |
| $R_3$ | représente un atome d'hydrogène ou un groupe méthyle, |
| $R_4$ | représente un groupe alkyle ou alcoxy comportant dans chaque cas de 1 à 5 atomes de carbone, un groupe $-NHCOR_6$, où $R_6$ représente un groupe alkyle ou hydroxyalkyle comportant dans chaque cas de 1 à 3 atomes de carbone ou un groupe phényle éventuellement substitué, ou un groupe sulfo, |
| $R_5$ | représente un groupe alkyle ou alcoxy comportant dans chaque cas de 1 à 5 atomes de carbone, hydroxyle, carboxyle ou sulfo, au moins deux substituants $R_5$, différents l'un de l'autre, se trouvant sur le noyau phényle A, |
| Me | représente un atome de métal lié par coordinence, |
| Pc | représente un reste de phtalocyanine de valence (a+b+c), |
| n | vaut de 1 à 3, |
| p | vaut de 2 à 4, |
| a | vaut de 1 à 2, |
| b | vaut de 0,5 à 1,5, et |
| c | vaut de 1 à 2, |

la somme (a+b+c) valant de 2,5 à 4.

2. Composés conformes à la revendication 1, caractérisés en ce que :

| | |
|---|---|
| $R_1$ et $R_2$ | sont identiques ou différents l'un de l'autre et représentent chacun un atome d'hydrogène, un groupe hydroxyéthyle, un groupe carboxyalkyle comportant 1 ou 2 atomes de carbone dans le groupe alkyle, ou un groupe phényle, ou bien |
| $R_1$ et $R_2$ | forment, avec l'atome d'azote, un noyau hétérocyclique à 5 ou 6 chaînons, qui peut comporter, comme autres hétéroatomes, des atomes d'azote, de soufre et/ou d'oxygène, |
| $R_4$ | représente un groupe alkyle ou alcoxy comportant dans chaque cas de 1 à 3 atomes de carbone, un groupe $-NHCOCH_3$, $-NHCOCH_2OH$, ou $-NHCOC_6H_5$, ou encore un groupe sulfo, |
| $R_5$ | représente un groupe alkyle ou alcoxy comportant de 1 à 3 atomes de carbone, hydroxyle, |

carboxyle ou sulfo, deux ou trois substituants $R_5$, dont au moins deux sont différents l'un de l'autre, se trouvant sur le noyau phényle A, et

Me représente un atome de fer, de cobalt, de nickel ou en particulier de cuivre, lié par coordinence, et

Pc, $R_3$, a, b, c, n et p ont les significations indiquées dans la revendication 1.

3. Composés conformes à la revendication 1 ou 2, caractérisés en ce qu'ils correspondent à la formule :

(2)

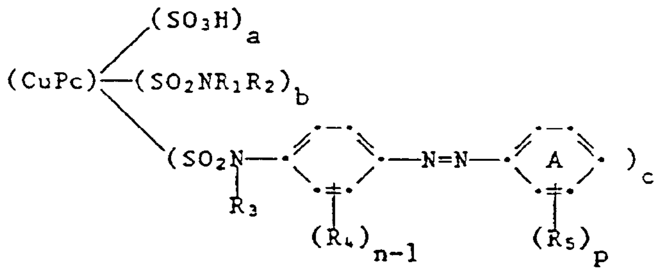

dans laquelle :

$R_1$ et $R_2$ sont identiques ou différents l'un de l'autre et représentent chacun un atome d'hydrogène, un groupe hydroxyéthyle, un groupe carboxyalkyle comportant 1 ou 2 atomes de carbone dans le groupe alkyle, ou un groupe phényle, ou bien

$R_1$ et $R_2$ forment, avec l'atome d'azote, un noyau hétérocyclique à 5 ou 6 chaînons, qui peut comporter, comme autres hétéroatomes, des atomes d'azote, de soufre et/ou d'oxygène,

$R_4$ représente un groupe alkyle ou alcoxy comportant dans chaque cas de 1 à 3 atomes de carbone, un groupe $-NHCOCH_3$, $-NHCOCH_2OH$, ou $-NHCOC_6H_5$, ou encore un groupe sulfo,

$R_5$ représente un groupe alkyle ou alcoxy comportant de 1 à 3 atomes de carbone, hydroxyle, carboxyle ou sulfo, deux ou trois substituants $R_5$, dont au moins deux sont différents l'un de l'autre, se trouvant sur le noyau phényle A, et

Pc, $R_3$, a, b, c, n et p ont les significations indiquées dans la revendication 1.

4. Composés conformes à l'une des revendications 1 à 3, caractérisés en ce que a et c valent de 1 à 1,5, indépendamment l'un de l'autre, et en ce que b vaut de 0,5 à 1,0.

5. Composés conformes à la revendication 1, caractérisés en ce qu'ils correspondent à la formule :

(2a)

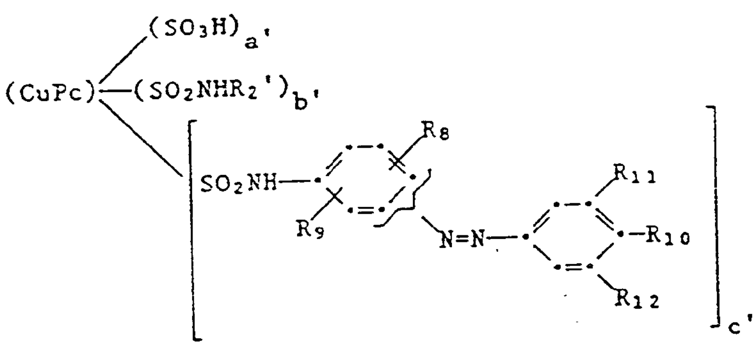

,

dans laquelle :

$R'_2$ représente un atome d'hydrogène, un groupe hydroxyéthyle ou un groupe phényle,

$R_8$ représente un atome d'hydrogène, un groupe méthyle ou un groupe méthoxy,

$R_9$ représente un atome d'hydrogène ou un groupe méthyle, méthoxy, $-NHCOCH_3$, $-NHCOCH_2OH$ ou sulfo,

$R_{10}$ représente un groupe méthyle ou hydroxy,

$R_{11}$ représente un groupe carboxy ou sulfo, et

$R_{12}$ représente un atome d'hydrogène ou un groupe carboxy ou sulfo, $R_{12}$ ayant une signification différente de celle de $R_{11}$,

a' et c' valent, indépendamment l'un de l'autre, de 1 à 1,5 et
b' vaut de 0,5 à 1,0, la somme (a+b+c) valent de 2,5 à 4.

6. Composés conformes à la revendication 1, caractérisés en ce qu'ils correspondent à la formule :

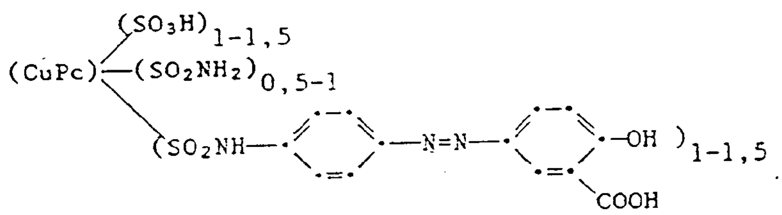

7. Composés conformes à la revendication 1, caractérisés en ce qu'ils correspondent à la formule :

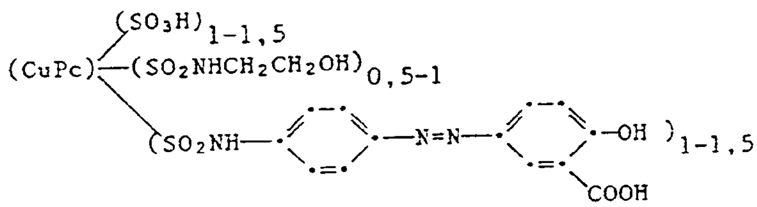

8. Composés conformes à la revendication 1, caractérisés en ce qu'ils correspondent à la formule :

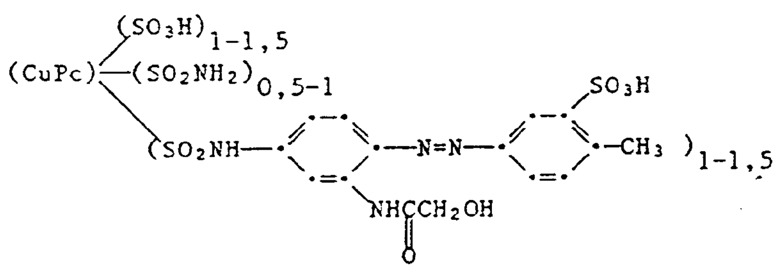

9. Procédé de préparation de composés conformes à la revendication 1, caractérisé en ce que l'on fait réagir un sulfochlorure de phtalocyanine de métal, de formule :

(3) 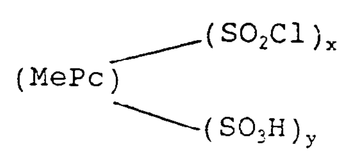

dans laquelle :

Me représente un atome de métal lié par coordinence,
x vaut de 2,5 à 4,
y vaut de 0 à 1,5 et la somme (x+y) est inférieure ou égale à 4,

simultanément ou successivement, avec des amines de formules

(4) 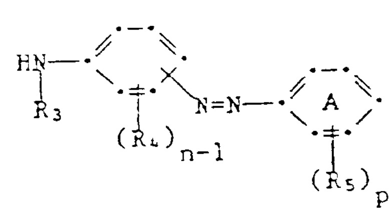

et
(5) $HNR_1R_2$,
dans lesquelles :
$R_1$, $R_2$, $R_3$, $R_4$, $R_5$, n et p ont les significations indiquées dans la revendication 1, en milieu aqueux et à des températures de 0 à 100°C, tout en maintenant le pH à une valeur de 5 à 10, et en ce que l'on effectue ensuite, éventuellement, une hydrolyse avec un acide ou un composé alcalin.

**10.** Procédé de préparation de composés conformes à la revendication 1, caractérisé en ce que l'on fait réagir un sulfochlorure de phtalocyanine de métal, de formule :

(3) 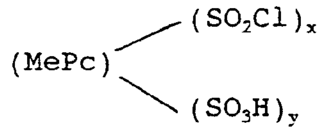

dans laquelle :
Me représente un atome de métal lié par coordinence,
x vaut de 2,5 à 4,
y vaut de 0 à 1,5 et la somme (x+y) est inférieure ou égale à 4,
simultanément ou successivement, avec des amines de formules

(6) 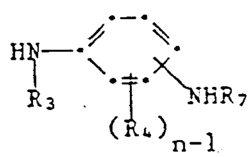

et
(5) $HNR_1R_2$,
dans lesquelles :
$R_7$ représente un groupe protecteur, et
$R_1$, $R_2$, $R_3$, $R_4$ et n ont les significations indiquées dans la revendication 1,
en milieu aqueux et à des températures de 0 à 100°C, tout en maintenant le pH à une valeur de 5 à 10, puis on sépare le groupe protecteur, on diazote le groupe amino formé et l'on fait ensuite copuler le composé diazo sur un copulant de formule :

(7) 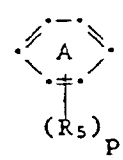

**11.** Utilisation des colorants conformes à l'une des revendications 1 à 8 ou des colorants préparés selon un procédé conforme à la revendication 9 ou 10, pour la teinture et l'impression de matériaux fibreux azotés et en particulier de matériaux fibreux cellulosiques.

**12.** Utilisation conforme à la revendication 11, caractérisée en ce que l'on teint des mélanges de fibres constitués de fibres synthétiques et de matériaux fibreux cellulosiques, en particulier des tissus mélangés polyester/ coton, en présence d'un colorant dispersé pour fibres de polyester, dans les conditions de teinture pour fibres de polyester.

**13.** Procédé de teinture de tissus mélangés polyester/coton avec des colorants dispersés et des colorants directs, caractérisé en ce que l'on utilise, en un procédé en une seule étape et à un seul bain, des colorants de formule (1) conformes à la revendication 1, en plus de colorants dispersés, et en ce que l'on effectue la teinture en bain aqueux à des températures situées dans l'intervalle allant de 100 à 150°C et de préférence de 120 à 130°C, et à un pH situé entre 4 et 7,5.

**Revendications pour l'Etat contractant suivant : ES**

1. Procédé de préparation de composés de formule :

(1)

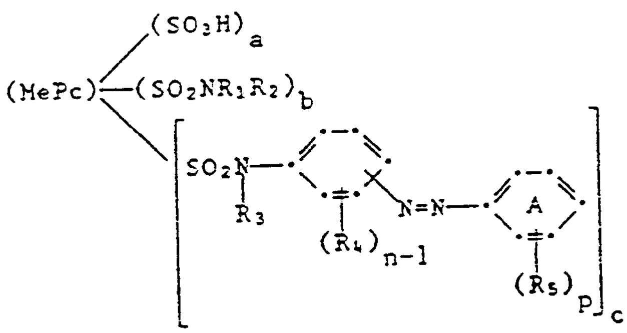

dans laquelle :

| | |
|---|---|
| $R_1$ et $R_2$ | sont identiques ou différents l'un de l'autre et représentent chacun un atome d'hydrogène, un groupe hydroxyalkyle comportant de 2 à 5 atomes de carbone, un groupe carboxyalkyle comportant de 1 à 5 atomes de carbone dans le fragment alkyle ou un groupe phényle, ou bien |
| $R_1$ et $R_2$ | forment conjointement avec l'atome d'azote un noyau hétérocycle comportant éventuellement d'autres hétéroatomes, |
| $R_3$ | représente un atome d'hydrogène ou un groupe méthyle, |
| $R_4$ | représente un groupe alkyle ou alcoxy comportant dans chaque cas de 1 à 5 atomes de carbone, un groupe -$NHCOR_6$, où $R_6$ représente un groupe alkyle ou hydroxyalkyle comportant dans chaque cas de 1 à 3 atomes de carbone ou un groupe phényle éventuellement substitué, ou un groupe sulfo, |
| $R_5$ | représente un groupe alkyle ou alcoxy comportant dans chaque cas de 1 à 5 atomes de carbone, hydroxyle, carboxyle ou sulfo, au moins deux substituants $R_5$, différents l'un de l'autre, se trouvant sur le noyau phényle A, |
| Me | représente un atome de métal lié par coordinence, |
| Pc | représente un reste de phtalocyanine de valence (a+b+c), |
| n | vaut de 1 à 3, |
| p | vaut de 2 à 4, |
| a | vaut de 1 à 2, |
| b | vaut de 0,5 à 1,5, et |
| c | vaut de 1 à 2, |

la somme (a+b+c) valant de 2,5 à 4,
caractérisé en ce que l'on fait réagir un sulfochlorure de phtalocyanine de métal, de formule :

(3)

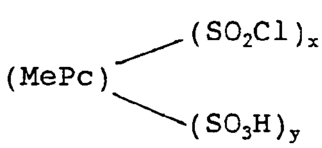

dans laquelle :

| | |
|---|---|
| Me | représente un atome de métal lié par coordinence, |
| x | vaut de 2,5 à 4, |
| y | vaut de 0 à 1,5 et la somme (x+y) est inférieure ou égale à 4, |

simultanément ou successivement, avec des amines de formules

(4) 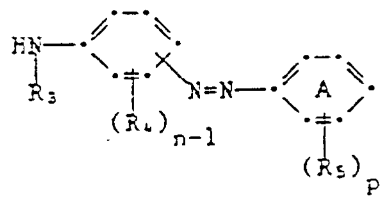

et

(5) $HNR_1R_2$,

dans lesquelles :

$R_1$, $R_2$, $R_3$, $R_4$, $R_5$, n et p ont les significations indiquées dans la revendication 1,

en milieu aqueux et à des températures de 0 à 100°C, tout en maintenant'le pH à une valeur de 5 à 10, et en ce que l'on effectue ensuite, éventuellement, une hydrolyse avec un acide ou un composé alcalin.

**2.** Procédé conforme à la revendication 1, caractérisé en ce que :

$R_1$ et $R_2$ sont identiques ou différents l'un de l'autre et représentent chacun un atome d'hydrogène, un groupe hydroxyéthyle, un groupe carboxyalkyle comportant 1 ou 2 atomes de carbone dans le groupe alkyle, ou un groupe phényle, ou bien

$R_1$ et $R_2$ forment, avec l'atome d'azote, un noyau hétérocyclique à 5 ou 6 chaînons, qui peut comporter, comme autres hétéroatomes, des atomes d'azote, de soufre et/ou d'oxygène,

$R_4$ représente un groupe alkyle ou alcoxy comportant dans chaque cas de 1 à 3 atomes de carbone, un groupe $-NHCOCH_3$, $-NHCOCH_2OH$, ou $-NHCOC_6H_5$, ou encore un groupe sulfo,

$R_5$ représente un groupe alkyle ou alcoxy comportant de 1 à 3 atomes de carbone, hydroxyle, carboxyle ou sulfo, deux ou trois substituants $R_5$, dont au moins deux sont différents l'un de l'autre, se trouvant sur le noyau phényle A, et

Me représente un atome de fer, de cobalt, de nickel ou en particulier de cuivre, lié par coordinence, et

Pc, $R_3$, a, b, c, n et p ont les significations indiquées dans la revendication 1.

**3.** Procédé conforme à la revendication 1 ou 2, pour la préparation de composés de formule :

(2) 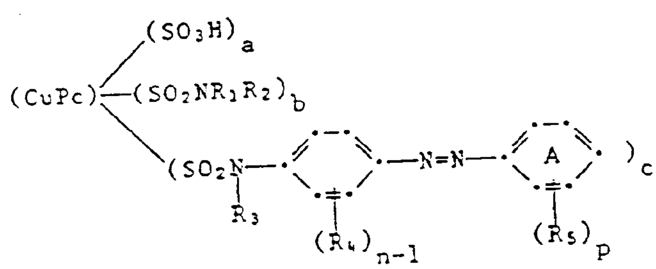

dans laquelle :

$R_1$ et $R_2$ sont identiques ou différents l'un de l'autre et représentent chacun un atome d'hydrogène, un groupe hydroxyéthyle, un groupe carboxyalkyle comportant 1 ou 2 atomes de carbone dans le groupe alkyle, ou un groupe phényle, ou bien

$R_1$ et $R_2$ forment, avec l'atome d'azote, un noyau hétérocyclique à 5 ou 6 chaînons, qui peut comporter, comme autres hétéroatomes, des atomes d'azote, de soufre et/ou d'oxygène,

$R_4$ représente un groupe alkyle ou alcoxy comportant dans chaque cas de 1 à 3 atomes de carbone, un groupe $-NHCOCH_3$, $-NHCOCH_2OH$, ou $-NHCOC_6H_5$, ou encore un groupe sulfo,

$R_5$ représente un groupe alkyle ou alcoxy comportant de 1 à 3 atomes de carbone, hydroxyle, carboxyle ou sulfo, deux ou trois substituants $R_5$, dont au moins deux sont différents l'un de l'autre, se trouvant sur le noyau phényle A, et

Pc, $R_3$, a, b, c, n et p ont les significations indiquées dans la revendication 1.

**4.** Procédé conforme à l'une des revendications 1 à 3, caractérisé en ce que a et c valent de 1 à 1,5, indépendamment l'un de l'autre, et en ce que b vaut de 0,5 à 1,0.

5. Procédé conforme à la revendication 1, pour la préparation de composés de formule :

(2a) 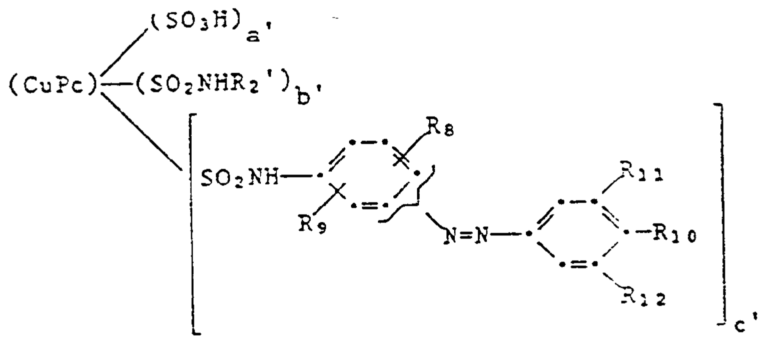 ,

dans laquelle :

| | |
|---|---|
| $R'_2$ | représente un atome d'hydrogène, un groupe hydroxyéthyle ou un groupe phényle, |
| $R_8$ | représente un atome d'hydrogène, un groupe méthyle ou un groupe méthoxy, |
| $R_9$ | représente un atome d'hydrogène ou un groupe méthyle, méthoxy, $-NHCOCH_3$, $-NHCOCH_2OH$ ou sulfo, |
| $R_{10}$ | représente un groupe méthyle ou hydroxy, |
| $R_{11}$ | représente un groupe carboxy ou sulfo, et |
| $R_{12}$ | représente un atome d'hydrogène ou un groupe carboxy ou sulfo, $R_{12}$ ayant une signification différente de celle de $R_{11}$, |
| a' et c' | valent, indépendamment l'un de l'autre, de 1 à 1,5 et |
| b' | vaut de 0,5 à 1,0, la somme (a+b+c) valant de 2,5 à 4. |

6. Procédé conforme à la revendication 1, pour la préparation de composés de formule :

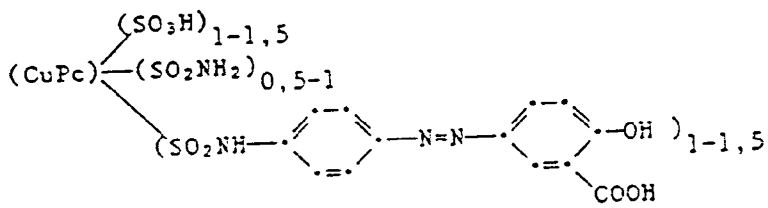

7. Procédé conforme à la revendication 1, pour la préparation de composés de formule :

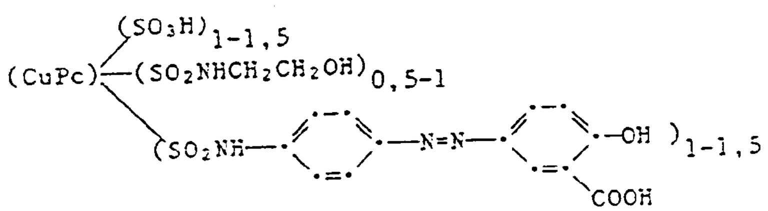

8. Procédé conforme à la revendication 1, pour la préparation de composés de formule :

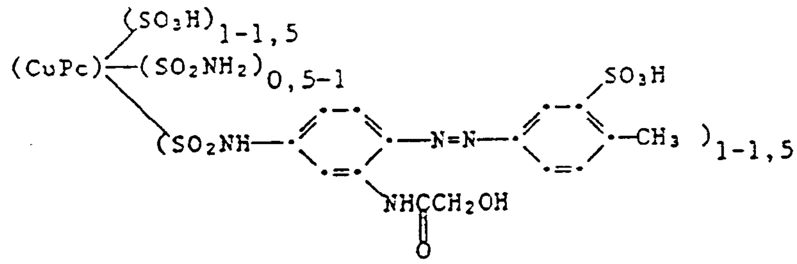

**9.** Procédé de préparation de composés conforme à la revendication 1, caractérisé en ce que l'on fait réagir un sulfochlorure de phtalocyanine de métal, de formule :

(3) 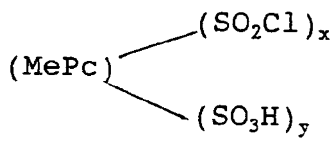

dans laquelle :

Me représente un atome de métal lié par coordinence,
x vaut de 2,5 à 4,
y vaut de 0 à 1,5 et la somme (x+y) est inférieure ou égale à 4,

simultanément ou successivement, avec des amines de formules

(6) 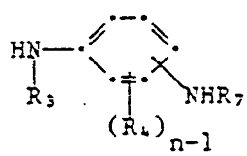

et

(5) $HNR_1R_2$,

dans lesquelles :

$R_7$ représente un groupe protecteur, et
$R_1$, $R_2$, $R_3$, $R_4$ et n ont les significations indiquées dans la revendication 1,

en milieu aqueux et à des températures de 0 à 100°C, tout en maintenant le pH à une valeur de 5 à 10, puis on sépare le groupe protecteur, on diazote le groupe amino formé et l'on fait ensuite copuler le composé diazo sur un copulant de formule :

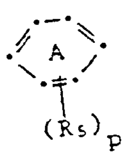

**10.** Utilisation des colorants préparés selon un procédé conforme aux revendications 1 à 9, pour la teinture et l'impression de matériaux fibreux azotés et en particulier de matériaux fibreux cellulosiques.

**11.** Utilisation conforme à la revendication 10, caractérisée en ce que l'on teint des mélanges de fibres constitués de fibres synthétiques et de matériaux fibreux cellulosiques, en particulier des tissus mélangés polyester/ coton, en présence d'un colorant dispersé pour fibres de polyester, dans les conditions de teinture pour fibres de polyester.

**12.** Procédé de teinture de tissus mélangés polyester/coton avec des colorants dispersés et des colorants directs, caractérisé en ce que l'on utilise, en un procédé en une seule étape et à un seul bain, des colorants de formule (1) conformes à la revendication 1, en plus de colorants dispersés, et en ce que l'on effectue la teinture en bain aqueux à des températures situées dans l'intervalle allant de 100 à 150°C et de préférence de 120 à 130°C, et à un pH situé entre 4 et 7,5.